# EUROPEAN PATENT APPLICATION

(11) **EP 4 826 604 A1**
(43) Date of publication of application: **21.10.2026**
(21) Application number: 26163408.3
(22) Date of filing: 09.03.2026
(51) Int. Cl.: G06N 10/70

(54) **COMPUTER PROGRAM, QUANTUM COMPUTATION SUPPORT METHOD, AND INFORMATION PROCESSING APPARATUS**

(30) Priority: 15.04.2025 JP 2025066965
(71) Applicant: Fujitsu Limited, Kawasaki-shi, Kanagawa 211-8588 (JP)
(72) Inventor: KISHI, Kaito, Kawasaki-shi, 211-8588 (JP)
(74) Representative: Haseltine Lake Kempner LLP

(57) **Abstract**

An information processing apparatus causes a quantum computer to execute syndrome measurements of each of ancilla qubits. The information processing apparatus identifies, from a decode graph in which vertices corresponding to the ancilla qubits is connected by edges corresponding to data qubits, based on results of the syndrome measurements by the quantum computer, one or more first vertices corresponding to one or more first ancilla qubits whose states have been inverted. The information processing apparatus sets, in the decode graph, a boundary line that divides the decode graph into two regions. Then, the information processing apparatus calculates, based on the number and arrangement of the first vertices located between the boundary line and a logical boundary, probabilities that inversion of the state of the logical qubit has occurred and that inversion of the state of the logical qubit has not occurred.

## Description

### FIELD

The embodiments discussed herein relate to a computer program, a quantum computation support method, and an information processing apparatus.

### BACKGROUND

In a quantum computer, establishment of quantum error correction techniques for reducing error probabilities has been sought. For example, one quantum state may be represented by a code in which quantum states of a plurality of physical qubits are redundantly encoded. The redundantly encoded code is referred to as a logical qubit.

Whether or not an error is present in a logical qubit is determined, for example, by syndrome measurement. From a syndrome measurement result, it is possible to detect whether a state of a logical qubit is inverted from a correct state (logical inversion).

As techniques relating to quantum error correction, for example, quantum error correction techniques executed using a decoder graph have been proposed. A fault-tolerant quantum error correction protocol for a surface code having Gottesman, Kitaev, Preskill (GKP) qubits has also been proposed. Simulation methods for improving calculation efficiency of a logical error occurrence probability calculation have also been proposed. A qubit error estimation method has also been proposed that estimates errors within a time constraint, with a code distance suitable for practical use, and without using an approximation that assumes a constant bit error occurrence probability. Among decoder techniques for acquiring syndrome measurement data and outputting logical error correction, techniques relating to a minimum weight perfect matching (MWPM) decoder have also been proposed. Furthermore, a Union-Find (UF) decoder that utilizes parallel computing resources for further speedup has also been proposed. See, for example, the following literatures.
U.S. Patent Application Publication No. 2024/0063821
U.S. Patent No. 11,599,820
International Publication Pamphlet No. WO 2024/095438
Japanese Laid-open Patent Publication No. 2024-59124

Samuel C. Smith, Benjamin J. Brown, Stephen D. Bartlett, "Mitigating errors in logical qubits", Communications Physics, Volume 7, Article number: 386 (2024), 28 November 2024.

Namitha Liyanage, Yue Wu, Siona Tagare, Lin Zhong, "FPGA-Based Distributed Union-Find Decoder for Surface Codes", IEEE, IEEE Transactions on Quantum Engineering, Volume 5, 25 September 2024.

When presence or absence of logical inversion is determined as two values of "present/absent" based on a syndrome measurement result, the determination may be incorrect in some cases. Therefore, in a decoder, instead of outputting presence or absence of logical inversion as binary values of "present/absent" based on a syndrome measurement result, it may be considered to output probabilities, namely, a probability that logical inversion has occurred and a probability that logical inversion has not occurred. In such a case, reliability is determined from the obtained probabilities, and, for example, quantum computation is performed using a state of a logical qubit having high reliability.

The probabilities of presence and absence of logical inversion are obtained, for example, by a classical computer calculating, for all error occurrence patterns that are conceivable from a syndrome measurement result, whether or not logical inversion is present. However, such calculation takes a long time. Moreover, since error correction based on syndrome measurement is repeatedly executed during a quantum computation process, it is important that the calculation be executable in a sufficiently short time.

### SUMMARY

In one aspect, the present disclosure aims to efficiently obtain probabilities of presence and absence of logical inversion.

In one aspect, there is provided a computer program that causes a computer to execute a process including: causing a quantum computer to execute syndrome measurements of each of a plurality of ancilla qubits used for error detection of a plurality of data qubits representing a state of a logical qubit; identifying, from a decode graph in which a plurality of vertices corresponding to the plurality of ancilla qubits is connected by edges corresponding to the plurality of data qubits, based on results of the syndrome measurements by the quantum computer, one or more first vertices corresponding to one or more first ancilla qubits whose states have been inverted; setting, in the decode graph, a boundary line that divides the decode graph into two regions; and calculating, based on a number and an arrangement of the one or more first vertices located between the boundary line and a logical boundary including each second vertex corresponding to a second ancilla qubit used for determining presence or absence of inversion of a predetermined basis state of the logical qubit, probabilities that inversion of the state of the logical qubit has occurred and that inversion of the state of the logical qubit has not occurred.

### BRIEF DESCRIPTION OF DRAWINGS

FIG. 1 illustrates an example of a quantum computation support method according to a first embodiment;
FIG. 2 illustrates an example of a configuration of a quantum computing system;
FIG. 3 illustrates an example of hardware configuration of a computer used in a second embodiment;
FIG. 4 illustrates properties of a qubit;
FIG. 5 illustrates an example of a decode graph for error detection of a logical operator Z_{L};
FIG. 6 illustrates a first example of error detection;
FIG. 7 illustrates a second example of error detection;
FIG. 8 illustrates a third example of error detection;
FIG. 9 illustrates an example of probability calculation for presence or absence of logical inversion;
FIG. 10 is a block diagram illustrating an example of functions provided in a classical computer for supporting quantum computation;
FIG. 11 is a flowchart illustrating an example of a procedure of quantum computation support processing;
FIG. 12 is a flowchart illustrating an example of a procedure of decoding processing;
FIG. 13 illustrates an example of a method for calculating a probability that logical inversion has occurred;
FIG. 14 illustrates an example of a decode graph;
FIG. 15 illustrates an example of generated clusters;
FIG. 16 illustrates a first example of a method for cluster generation processing;
FIG. 17 illustrates a second example of the method for cluster generation processing;
FIG. 18 illustrates a third example of the method for cluster generation processing;
FIG. 19 is a flowchart illustrating an example of a procedure of inversion presence/absence probability calculation processing;
FIG. 20 is a flowchart illustrating an example of a procedure of growth start point setting processing;
FIG. 21 is a flowchart illustrating an example of a procedure of overall growth processing of a cluster search range;
FIG. 22 is a flowchart illustrating an example of a procedure of cluster growth processing;
FIG. 23 illustrates an example of a method of measuring distances between clusters;
FIG. 24 illustrates an example of a method for detecting decision boundaries;
FIG. 25 illustrates an example of a method for calculating an existence probability of a decision boundary based on an even cluster;
FIG. 26 illustrates an example of a method for calculating an existence probability of a decision boundary based on an odd cluster;
FIG. 27 is a first diagram illustrating examples of calculation of a probability of presence or absence of logical inversion based on generated clusters;
FIG. 28 is a second diagram illustrating examples of calculation of the probability of presence or absence of logical inversion based on generated clusters;
FIG. 29 is a third diagram illustrating an example of calculation of the probability of presence or absence of logical inversion based on generated clusters;
FIG. 30 illustrates an example of calculation results of existence probabilities of decision boundaries when a plurality of clusters are generated;
FIG. 31 illustrates an example of a cluster growth method;
FIG. 32 illustrates an example of a method for calculating an existence probability of a decision boundary;
FIG. 33 is a first diagram illustrating an example of a method for calculating a probability of presence or absence of a logical inversion using weight values;
FIG. 34 is a second diagram illustrating an example of the method for calculating a probability of presence or absence of a logical inversion using weight values;
FIG. 35 is a first diagram illustrating an example of a method for calculating a probability of presence or absence of a logical inversion using a decision boundary connected to a logical boundary;
FIG. 36 is a second diagram illustrating an example of the method for calculating a probability of presence or absence of a logical inversion using a decision boundary connected to a logical boundary; and
FIG. 37 is a third diagram illustrating an example of the method for calculating a probability of presence or absence of a logical inversion using a decision boundary connected to a logical boundary.

### DESCRIPTION OF EMBODIMENTS

Hereinafter, embodiments of the present disclosure will be described with reference to the drawings. Note that a plurality of embodiments may be implemented in combination with one another within a range in which no inconsistency arises.

### (a) First Embodiment

A first embodiment is a quantum computation support method for efficiently calculating probabilities of presence and absence of logical inversion of a logical qubit.

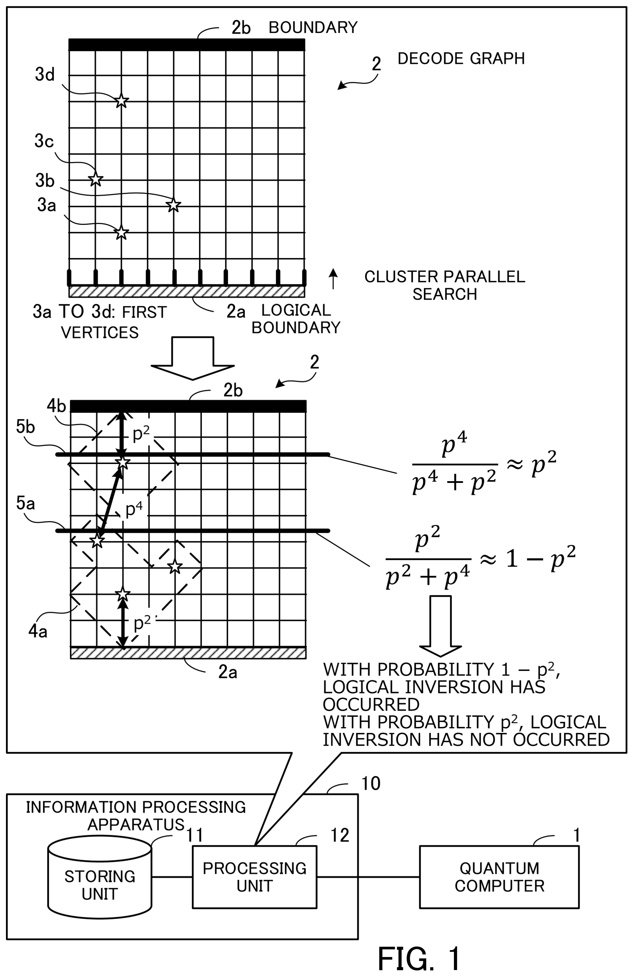

FIG. 1 illustrates an example of the quantum computation support method according to the first embodiment. FIG. 1 depicts an information processing apparatus 10 for implementing the quantum computation support method according to the first embodiment. The information processing apparatus 10 is connected to a quantum computer 1. The information processing apparatus 10 may implement the quantum computation support method according to the first embodiment by, for example, executing a predetermined quantum computation support program.

The information processing apparatus 10 includes a storing unit 11 and a processing unit 12. The storing unit 11 is, for example, a memory or a storage device included in the information processing apparatus 10. The processing unit 12 is, for example, a processor included in the information processing apparatus 10. The information processing apparatus 10 may include a plurality of processors. Among a plurality of processes performed by the information processing apparatus 10, one process and another process may be executed by different processors, respectively.

The storing unit 11 stores, for example, a quantum circuit to be executed by the quantum computer 1. The processing unit 12 causes the quantum computer 1 to execute a quantum computation by transmitting, to the quantum computer 1, instructions such as quantum gate operations in accordance with the quantum circuit stored in the storing unit 11. During execution of the quantum computation, the processing unit 12 calculates probabilities of presence and absence of inversion (logical inversion) of a state of a logical qubit. For example, the processing unit 12 calculates the probabilities of presence and absence of logical inversion in accordance with the following procedure.

The processing unit 12 causes the quantum computer 1 to perform syndrome measurement on each of a plurality of ancilla qubits used for error detection of a plurality of data qubits representing a state of a logical qubit. Upon receiving results of the syndrome measurement, the processing unit 12 generates a decode graph 2 in which a plurality of vertices corresponding to the plurality of ancilla qubits are connected by edges corresponding to the data qubits. Based on the results of the syndrome measurement performed by the quantum computer 1, the processing unit 12 identifies, from the decode graph 2, first vertices 3a to 3d corresponding to first ancilla qubits for which inversion of a state has been confirmed.

The processing unit 12 sets, in the decode graph 2, boundary lines 5a and 5b for dividing the decode graph 2 into three parts. The processing unit 12 sets, for example, the boundary lines 5a and 5b in a space in which an error is likely not to have occurred.

The processing unit 12 defines, as a logical boundary 2a, a region including a second vertex corresponding to a second ancilla qubit used for determining presence or absence of logical inversion of a state of a predetermined basis in a logical qubit. The processing unit 12 then calculates probabilities of presence and absence of logical inversion of a state of the logical qubit based on the number and arrangement of the first vertices 3a to 3d between the logical boundary 2a and the boundary lines 5a and 5b.

In this manner, by calculating probabilities of presence and absence of logical inversion of a state of a logical qubit based on the number and arrangement of the first vertices 3a to 3d between the logical boundary 2a and the boundary lines 5a and 5b, the processing unit 12 efficiently calculates probabilities of presence and absence of logical inversion. For example, when probabilities of presence and absence of state inversion are calculated based on all error occurrence patterns capable of explaining inversion of states at the first vertices 3a to 3d, an amount of calculation becomes enormous. In contrast, when probabilities of presence and absence of logical inversion of a state of a logical qubit are calculated based on the number and arrangement of the first vertices 3a to 3d between the logical boundary 2a and the boundary lines 5a and 5b, the amount of calculation is reduced, and the processing unit 12 calculates the probabilities of presence and absence of logical inversion within a short time.

In calculation of the probabilities of presence and absence of logical inversion, the processing unit 12 calculates, for example, based on the number and arrangement of the first vertices 3a to 3d between the logical boundary 2a and the boundary lines 5a and 5b, a first probability (existence probability) that no error has occurred in edges of the decode graph 2 intersecting the boundary lines 5a and 5b. The existence probability may also be rephrased as a probability that the boundary lines 5a and 5b exist in a space in which no error has occurred. The processing unit 12 then calculates probabilities of presence and absence of logical inversion of a state of a logical qubit based on the first probability.

The probability that no error has occurred in edges of the decode graph 2 intersecting the boundary lines 5a and 5b is calculated at high speed by a simple calculation.

Whether the existence probability contributes to a probability that logical inversion of a state of a logical qubit has occurred or to a probability that logical inversion has not occurred depends on whether the number of the first vertices 3a to 3d between the logical boundary 2a and the boundary lines 5a and 5b is an even number or an odd number. For example, the number "3" of the first vertices 3a to 3c between the logical boundary 2a and the boundary line 5a is an odd number. In this case, the existence probability of the boundary line 5a contributes to a probability that logical inversion of a state of a logical qubit has occurred. In addition, the number "4" of the first vertices 3a to 3d between the logical boundary 2a and the boundary line 5b is an even number. In this case, the existence probability of the boundary line 5b contributes to a probability that logical inversion of a state of a logical qubit has not occurred.

Accordingly, the processing unit 12 determines whether the number of the first vertices 3a to 3d between the logical boundary 2a and the boundary lines 5a and 5b is an even number or an odd number. When the number is an even number, the processing unit 12 calculates, based on the first probability, a second probability that logical inversion of a state of a logical qubit has not occurred. When the number is an odd number, the processing unit 12 calculates, based on the first probability, a third probability that logical inversion of a state of a logical qubit has occurred. Thus, the probabilities of presence and absence of logical inversion are correctly calculated.

The number of boundary lines to be set may be one or may be plural. For example, the processing unit 12 sets a plurality of boundary lines 5a and 5b and calculates the second probability that logical inversion has not occurred and the third probability that logical inversion has occurred. The second probability is a total of the first probabilities of the boundary lines 5a for which the number of the first vertices 3a to 3d between the logical boundary 2a and the boundary lines 5a and 5b is an even number. The third probability is a total of the first probabilities of the boundary lines 5b for which the number of the first vertices 3a to 3d between the logical boundary 2a and the boundary lines 5a and 5b is an odd number.

In this manner, by calculating probabilities of presence and absence of logical inversion using a plurality of boundary lines set by the processing unit 12, calculation accuracy is improved.

The processing unit 12 calculates existence probabilities of the boundary lines 5a and 5b by different calculation methods depending on whether the number of the first vertices 3a to 3d between the logical boundary 2a and the boundary lines 5a and 5b is an even number or an odd number. For example, the processing unit 12 counts the number of the first vertices 3a to 3d between the logical boundary 2a and the boundary lines 5a and 5b.

When the counted number is an even number, the processing unit 12 calculates, as a second probability, a probability that states of the counted first vertices have been inverted due to errors occurring in data qubits corresponding to edges connecting pairs of the counted first vertices. When the counted number is an odd number, the processing unit 12 calculates, as a third probability, a probability that a state of one of the counted first vertices has been inverted due to an error occurring in a data qubit corresponding to an edge connecting the one first vertex and the logical boundary 2a.

In this manner, by applying different calculation methods depending on whether the number of the first vertices 3a to 3d between the logical boundary 2a and the boundary lines 5a and 5b is an even number or an odd number, probabilities of presence and absence of logical inversion are accurately calculated.

The processing unit 12 may classify the first vertices 3a to 3d into a plurality of clusters in order to determine appropriate positions at which the boundary lines 5a and 5b are to be set. For example, one cluster includes first vertices located close to one another.

For example, based on positions of the first vertices 3a to 3d, the processing unit 12 generates one or more clusters 4a and 4b including at least part of the first vertices 3a to 3d. The processing unit 12 then sets the boundary lines 5a and 5b at positions avoiding paths on the decode graph 2 connecting first vertices belonging to the same cluster. Thus, the boundary lines 5a and 5b are set in a space in which an error is likely not to have occurred.

In generating clusters, the processing unit 12, for example, expands regions centered on the first vertices 3a to 3d. When regions centered on a plurality of first vertices come into contact with one another, the processing unit 12 integrates the contacted regions into one region. The processing unit 12 then defines ranges of regions at a time when predetermined region expansion stop conditions are satisfied as clusters 4a and 4b. The region expansion stop conditions include, for example, that a region comes into contact with another region and that a region reaches an end of the decode graph 2. By generating the clusters 4a and 4b in this manner, clusters are easily generated and calculation of probabilities of presence and absence of logical inversion is made efficient.

Processing for generating clusters is made efficient by parallelization. For example, the processing unit 12 grows search ranges in parallel along edges of the decode graph 2 from each of a plurality of second vertices belonging to the logical boundary. When a search range reaches a first vertex, the processing unit 12 expands a region centered on the reached first vertex. By growing the search ranges in parallel by a plurality of processors or a plurality of processor cores, the processing unit 12 executes cluster generation processing at high speed.

When the clusters 4a and 4b are generated, the processing unit 12 calculates existence probabilities of the boundary lines 5a and 5b using the clusters. For example, the processing unit 12 determines a calculation method for existence probabilities of the boundary lines 5a and 5b depending on whether the number of the first vertices in the clusters 4a and 4b immediately below the boundary lines 5a and 5b is an even number or an odd number.

When the number of the first vertices in a cluster is an even number, the processing unit 12 calculates "(a probability that an error has occurred between the first vertices in the cluster)/((a probability that an error has occurred between the first vertices in the cluster) + (a probability that an error continues outside the cluster))". The processing unit 12 sets a result of the calculation as an existence probability of a boundary line set immediately above the first vertices of the cluster.

When the number of the first vertices in a cluster is an odd number, the processing unit 12 calculates "(a probability that an error continues downward from the cluster)/((a probability that an error continues downward from the cluster) + (a probability that an error continues upward from the cluster))". The processing unit 12 sets a result of the calculation as an existence probability of a boundary line set immediately above the first vertices of the cluster.

For example, the cluster 4a includes three (odd number of) first vertices 3a to 3c. A probability that an error continues downward from the cluster 4a is a value obtained by raising a probability p of occurrence of a physical error to a power corresponding to a distance (the number "2" of edges on a shortest path) between the first vertex 3a closest to the logical boundary 2a and the logical boundary 2a, that is, p².

A probability that an error continues upward from the cluster 4a is a value obtained by raising the probability p of occurrence of a physical error to a power corresponding to a distance (the number of edges on a shortest path) between the first vertex 3c closest to the boundary 2b and the boundary 2b. However, another cluster 4b is interposed between the first vertex 3c and the boundary 2b. In this case, instead of the distance between the first vertex 3c and the boundary 2b, a shortest distance "4" between the first vertex 3c and a first vertex 3d in the cluster 4b is used. Accordingly, the probability that an error continues upward from the cluster 4a is p⁴, which is the fourth power of the physical error occurrence probability p.

As a result, an existence probability of the boundary line 5a immediately above the cluster 4a becomes "p²/(p² + p⁴) ≈ 1-p²". In this case, since three (odd number of) first vertices 3a to 3c exist below the boundary line 5a, the processing unit 12 determines that logical inversion has occurred with a probability of "1 - p²".

The cluster 4b includes one (odd number of) first vertex 3d. A probability that an error continues downward from the cluster 4b is a value obtained by raising the probability p of occurrence of a physical error to a power corresponding to a distance between the first vertex 3d and the logical boundary 2a. However, another cluster 4a is interposed between the first vertex 3d and the logical boundary 2a. In this case, instead of the distance between the first vertex 3d and the logical boundary 2a, a shortest distance "4" between the first vertex 3d and the first vertices 3a to 3c in the cluster 4a is used. Accordingly, the probability that an error continues downward from the cluster 4b is p⁴, which is the fourth power of the physical error occurrence probability p.

A probability that an error continues upward from the cluster 4b is a value obtained by raising the probability p of occurrence of a physical error to a power corresponding to a distance "2" between the first vertex 3d and the boundary 2b.

As a result, an existence probability of the boundary line 5b immediately above the cluster 4b becomes "p⁴/(p⁴ + p²) ≈ p²". In this case, since four (even number of) first vertices 3a to 3d exist below the boundary line 5b, the processing unit 12 determines that logical inversion has not occurred with a probability of "p²".

### (b) Second Embodiment

A second embodiment relates to a quantum computing system that obtains probabilities of presence and absence of logical inversion and performs post-selection based on the probabilities. Post-selection refers to selection of a success event after measurement. That is, in post-selection, a quantum state is used for subsequent computation only when the correctness of the quantum state is equal to or higher than a predetermined level.

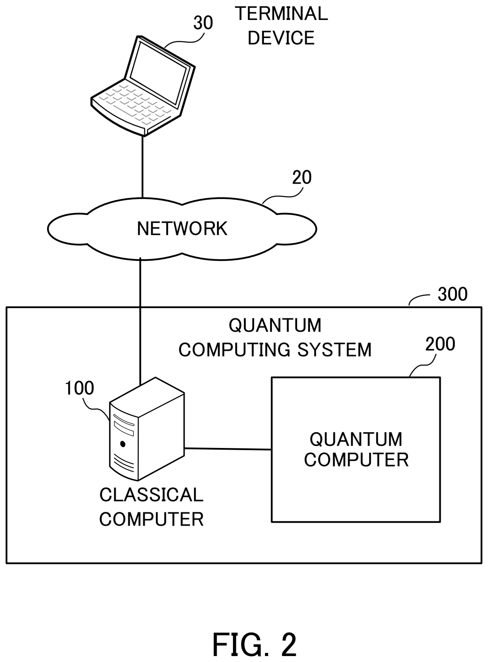

FIG. 2 illustrates an example of a configuration of a quantum computing system. A quantum computing system 300 is, for example, a computer system that performs computation using principles of quantum mechanics. The quantum computing system 300 includes a classical computer 100 and a quantum computer 200. The classical computer 100 is a von Neumann type computer. The quantum computer 200 is a quantum gate type non-von Neumann computer that performs quantum computation by applying quantum gates to qubits.

A terminal device 30 is connected to the classical computer 100 via a network 20. The terminal device 30 is a computer used by a user who requests quantum computation by the quantum computing system 300. The classical computer 100 receives, for example, a quantum computation request including a quantum circuit from the terminal device 30. The quantum circuit is a quantum computation model indicating an order of gate operations on qubits based on an arrangement of elements such as quantum gates. A qubit is a bit capable of representing a superposed state of a state "0" and a state "1".

The classical computer 100 instructs the quantum computer 200 to perform gate operations on qubits in accordance with the quantum computation request received from the terminal device 30. The classical computer 100 also acquires measurement results of the respective qubits from the quantum computer 200.

The quantum computer 200 performs gate operations on the qubits in accordance with instructions from the classical computer 100. The quantum computer 200 also measures states of the qubits and transmits measurement results to the classical computer 100.

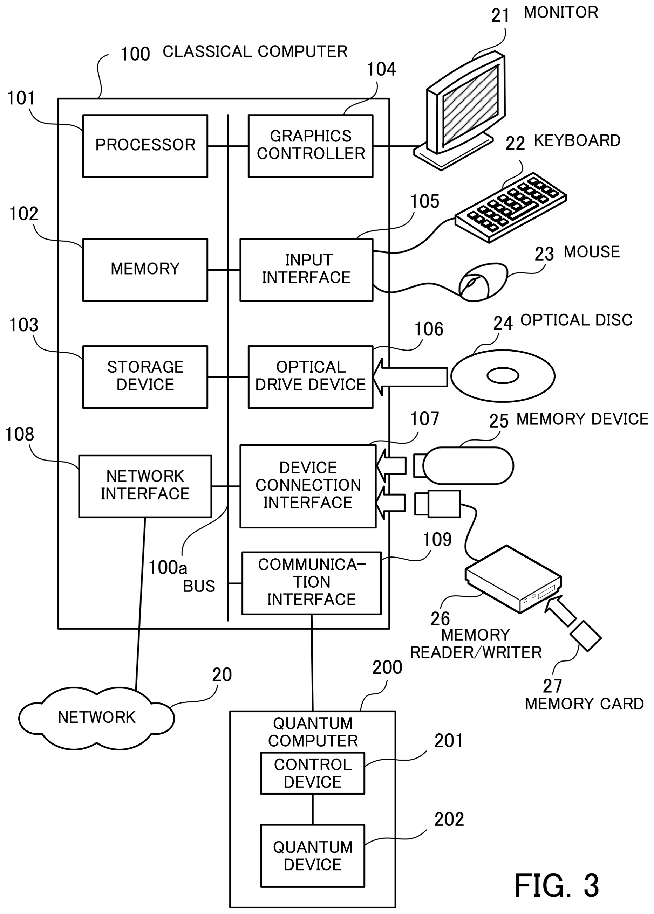

FIG. 3 illustrates an example of hardware configuration of a computer used in the present embodiment. An entire apparatus of the classical computer 100 is controlled by a processor 101. A memory 102 and a plurality of peripheral devices are connected to the processor 101 via a bus 100a.

The classical computer 100 may be a multiprocessor system including a plurality of processors. A set of the plurality of processors in the multiprocessor system may be referred to as the processor 101. The processor 101 may also be referred to as processor circuitry. Each of the plurality of processors executes part or all of a plurality of processes executed in the classical computer 100. When a plurality of related processes exists, two or more of the plurality of processes may be executed by different processors.

The processor 101 is, for example, a central processing unit (CPU), a microprocessing unit (MPU), or a digital signal processor (DSP) . At least part of functions implemented by execution of programs by the processor 101 may be implemented by electronic circuits such as an application specific integrated circuit (ASIC) or a programmable logic device (PLD).

The memory 102 is used as a main storage device of the classical computer 100. The memory 102 temporarily stores at least part of an operating system (OS) program and application programs executed by the processor 101. The memory 102 also stores various types of data used for processing by the processor 101. As the memory 102, for example, a volatile semiconductor storage device such as a random access memory (RAM) is used.

Peripheral devices connected to the bus 100a include a storage device 103, a graphics controller 104, an input interface 105, an optical drive device 106, a device connection interface 107, a network interface 108, and a communication interface 109.

The storage device 103 writes and reads data electrically or magnetically with respect to an internal recording medium. The storage device 103 is used as an auxiliary storage device of the classical computer 100. The storage device 103 stores OS programs, application programs, and various types of data. As the storage device 103, for example, a hard disk drive (HDD) or a solid state drive (SSD) is used.

The graphics controller 104 is an arithmetic unit that performs image processing. The graphics controller 104 is, for example, a graphics processing unit (GPU). A monitor 21 is connected to the graphics controller 104. The graphics controller 104 displays images on a screen of the monitor 21 in accordance with instructions from the processor 101. As the monitor 21, for example, an electroluminescence (EL) display device or a liquid crystal display device is used. When a GPU, for example, is used as the graphics controller 104, the graphics controller 104 also executes complex numerical calculations such as matrix calculations.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a trackball.

The optical drive device 106 reads data recorded on an optical disc 24 or writes data to the optical disc 24 by using laser light or the like. The optical disc 24 is a portable recording medium on which data is recorded so as to be readable by reflection of light. Examples of the optical disc 24 include a digital versatile disc (DVD), a DVD-RAM, a compact disc read only memory (CD-ROM), and a CD-recordable/rewriteable (CD-R/RW).

The device connection interface 107 is a communication interface for connecting peripheral devices to the classical computer 100. For example, a memory device 25 or a memory reader/writer 26 is connected to the device connection interface 107. The memory device 25 is a recording medium having a communication function with the device connection interface 107. The memory reader/writer 26 writes data to a memory card 27 or reads data from the memory card 27. The memory card 27 is a card-type recording medium.

The network interface 108 is connected to the network 20. The network interface 108 transmits and receives data with another computer or a communication device via the network 20. The network interface 108 is, for example, a wired communication interface connected by a cable to a wired communication device such as a switch or a router. The network interface 108 may also be a wireless communication interface that establishes communication connection by radio waves with a wireless communication device such as a base station or an access point.

The communication interface 109 is connected to the quantum computer 200. The communication interface 109 communicates with the quantum computer 200. The communication interface 109 transmits, for example, quantum gate operation instructions based on a quantum circuit to the quantum computer 200. The communication interface 109 also receives execution results of the quantum circuit from the quantum computer 200.

The classical computer 100 implements processing functions of the second embodiment by the hardware described above. The information processing apparatus 10 described in the first embodiment is also implemented by hardware similar to that of the classical computer 100 illustrated in FIG. 3.

The classical computer 100 implements processing functions of the second embodiment by executing a program recorded on a computer-readable recording medium. A program describing processing contents to be executed by the classical computer 100 is recorded on various recording media. For example, the program to be executed by the classical computer 100 is stored in the storage device 103. The processor 101 loads at least part of the program in the storage device 103 into the memory 102 and executes the program. The program to be executed by the classical computer 100 may also be recorded on a portable recording medium such as the optical disc 24, the memory device 25, or the memory card 27. The program stored in the portable recording medium becomes executable after installation in the storage device 103 under control of the processor 101. Alternatively, the processor 101 may read and execute the program directly from the portable recording medium.

The quantum computer 200 includes a control device 201 and a quantum device 202. The control device 201 executes gate operations on qubits in the quantum device 202 in accordance with instructions from the classical computer 100. For example, the control device 201 performs gate operations on qubits by irradiating the qubits with microwaves of a predetermined frequency.

The quantum device 202 includes a plurality of qubits. The quantum device 202 includes, for example, qubits of a superconducting type, an ion trap type, or a cold atom type. The quantum device 202 is also referred to as a quantum processing unit (QPU).

A user who uses the quantum computing system 300 generates, by using the terminal device 30, a quantum circuit for solving a target problem by quantum computation. When the user instructs execution of quantum computation to the terminal device 30, a quantum computation request including the generated quantum circuit is transmitted from the terminal device 30 to the quantum computing system 300.

In the quantum computing system 300, the classical computer 100 causes the quantum computer 200 to execute quantum computation based on the quantum circuit in accordance with the quantum computation request. At this time, the classical computer 100 converts the quantum circuit to be executed into a quantum circuit using executable quantum gates in accordance with hardware specifications of the quantum computer 200, such as native gates corresponding to the quantum device 202.

Next, an overview of error correction in quantum computation will be described.

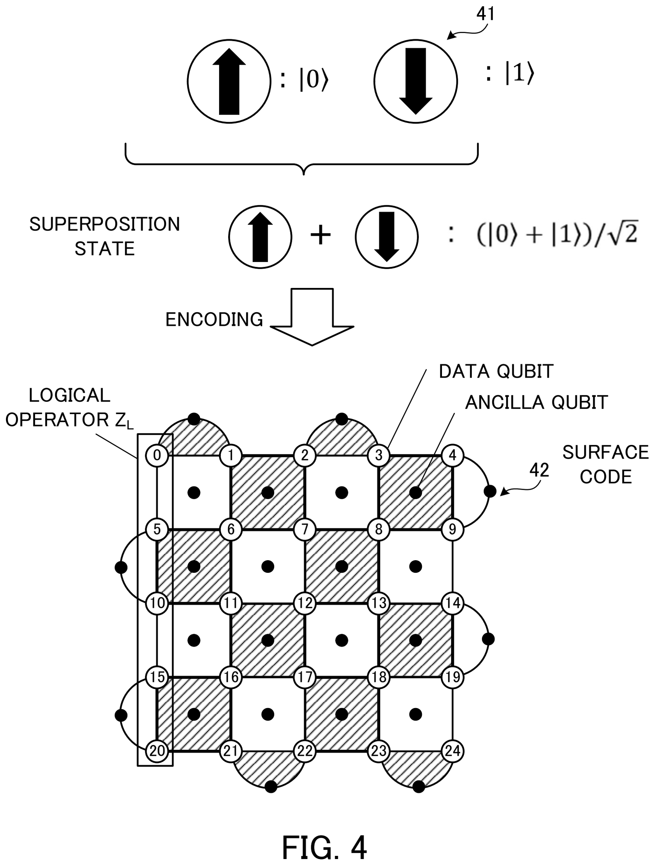

FIG. 4 illustrates properties of a qubit. A qubit 41, which is the minimum unit of information in the quantum computer 200, is capable of taking a state |0> and a state |1>, and is also capable of taking a superposition state thereof. In the superposition state, a value obtained when the qubit 41 is measured is determined probabilistically as |0> or |1>. For example, when a probability of |0> and a probability of |1> are equal, the superposition state of the qubit 41 is expressed as "(|0> + |1>)/₂^{1/2}".

Information held by the qubit 41 is destroyed due to interaction with an environment, operation errors, and the like (that is, an error occurs). For example, when a superposition state is destroyed due to an error, the state of the qubit 41 changes to |0> or |1>. In order to improve calculation accuracy, detection of a qubit in which an error has occurred and correction of a state of the qubit to a correct state are needed.

Accordingly, a technique called quantum error correction has been proposed. In quantum error correction, a superposition state is encoded by combining a plurality of physical qubits. When encoding is performed, a state of one or more logical qubits is represented by the plurality of physical qubits used for the encoding. Then, detection and correction of a qubit in which an error has occurred are performed based on a state of the plurality of encoded qubits as a whole.

One of codes representing a logical qubit used for error correction (quantum error correction codes) is a surface code 42. In the surface code 42, physical qubits are arranged in a lattice pattern on a two-dimensional plane. In FIG. 4, white circles indicate physical qubits used for encoding. These physical qubits are referred to as data qubits. Identification numbers of the data qubits are indicated inside the white circles corresponding to the data qubits.

Physical qubits represented by black circles are physical qubits used for error detection. These physical qubits are referred to as ancilla qubits. Each ancilla qubit is connected to two or four surrounding data qubits. For example, when one of the data qubits connected to an ancilla qubit changes from a correct state to an inverted state, a state of the ancilla qubit is inverted. That is, by measuring a state of the ancilla qubit, occurrence of an error in any one of the surrounding data qubits is detected.

In the surface code 42, for example, data qubits arranged on a left boundary (a logical boundary) (data qubits having identification numbers "0, 5, 10, 15, and 20") represent a logical operator Z_{L} of a Z basis of a logical qubit. A subscript L indicates a state of the logical qubit. In this case, ancilla qubits arranged in shaded regions are used for error detection of the logical operator Z_{L}.

Hereinafter, details of error detection will be described focusing on the logical operator Z_{L}. Error detection is also performed for a logical operator X_{L} in the same manner as for the logical operator Z_{L}. The logical operator X_{L} is represented by, for example, data qubits arranged on an upper boundary of the surface code 42. Ancilla qubits arranged in white regions are used for error detection of the logical operator X_{L}.

A decode graph is used for error detection based on ancilla qubits.

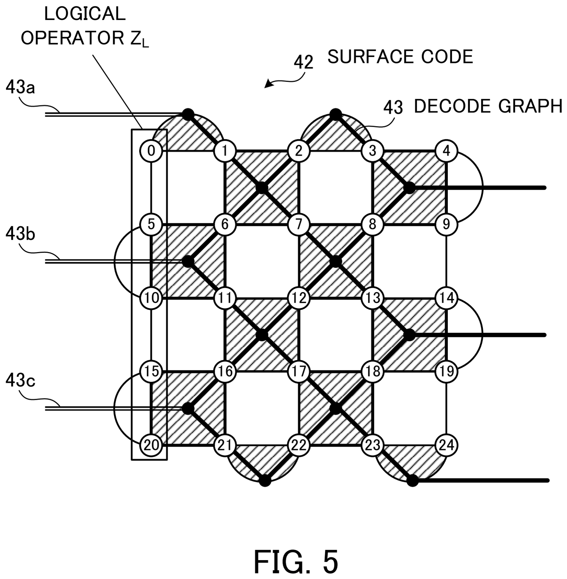

FIG. 5 illustrates an example of a decode graph for error detection of the logical operator Z_{L}. In FIG. 5, ancilla qubits other than ancilla qubits used for error detection of the logical operator Z_{L} are omitted.

A decode graph 43 includes vertices corresponding to detectors of ancilla qubits used for error detection of the logical operator Z_{L}, and edges corresponding to data qubits. Each vertex represents an element indicating that appropriate differences are taken from measurement values of ancilla qubits. In a code-capacity noise model, a value of a logical qubit coincides with a value of a vertex.

Each edge connects two vertices corresponding to ancilla qubits that detect an error occurring in a data qubit corresponding to the edge. In addition, edges 43a to 43c for detecting presence or absence of inversion of the logical operator Z_{L} are indicated for ancilla qubits located at the logical boundary (double lines in FIG. 5). When a state of a logical qubit corresponding to a vertex connected by any one of the double-line edges 43a to 43c is inverted, an error is defined as being detected on the edge.

Physical qubits constituting the surface code 42 cause errors at a certain frequency. An error occurring in a data qubit is detected by syndrome measurement using ancilla qubits connected to the data qubit.

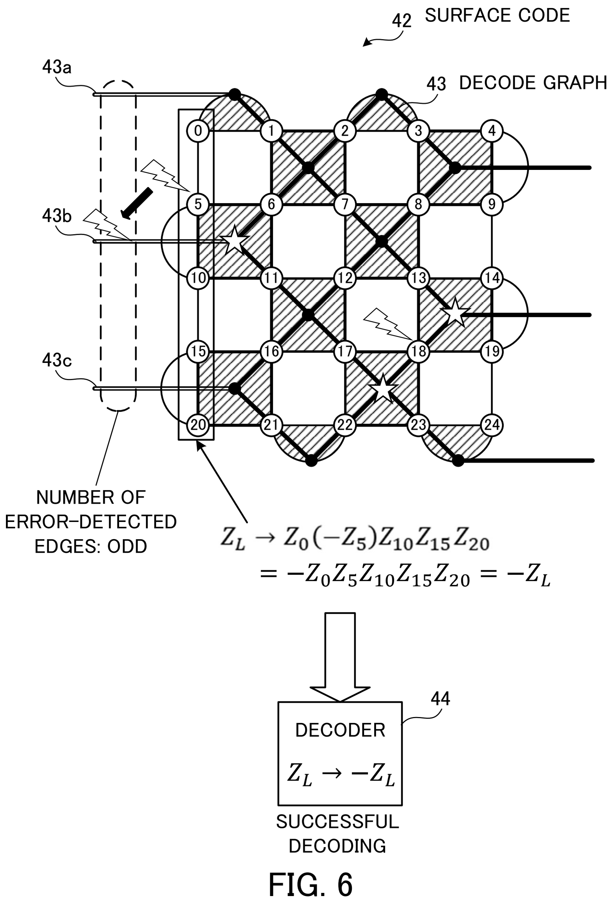

FIG. 6 illustrates a first example of error detection. For example, errors are assumed to occur in data qubits numbered 5 and 18. In this case, inversion of states of one ancilla qubit adjacent to the data qubit numbered 5 and two ancilla qubits adjacent to the data qubit numbered 18 is detected by syndrome measurement. That is, errors are detected in these ancilla qubits.

In FIG. 6, ancilla qubits in which errors are detected are indicated by star marks. Error detection by ancilla qubits is referred to as a detection event. An ancilla qubit in which an error is detected corresponds to a detection-event location.

The data qubit numbered 5 in which an error has occurred constitutes the logical operator Z_{L}. A state of Z_{L} is represented by a tensor product of Z bases of constituent data qubits. Z bases of data qubits numbered 0, 5, 10, 15, and 20 are denoted as "Z₀, Z₅, Z₁₀, Z₁₅, and Z₂₀", respectively. When a state of the data qubit numbered 5 is inverted, "Z₅" becomes "-Z₅". At this time, a state of the logical operator Z_{L} becomes "Z_{L} → Z₀ (-Z₅) Z₁₀Z₁₅Z₂₀ = -Z₀Z₅Z₁₀Z₁₅Z₂₀ = -Z_{L}". That is, a state of the logical operator Z_{L} is inverted.

When the number of edges among the double-line edges 43a to 43c in which errors are detected is odd, logical inversion of the logical operator Z_{L} occurs. In the example of FIG. 6, a detection event occurs in an ancilla qubit connected to the data qubit numbered 5, whereby an error is detected on the edge 43b. Errors are not detected on the edges 43a and 43c. Accordingly, among the edges 43a to 43c for detecting logical inversion, the number of edges on which errors are detected is an odd number.

For example, a decoder 44 counts, based on syndrome results, the number of errors detected on the edges 43a to 43c. When the number of edges in which errors are detected is odd, the decoder 44 determines that logical inversion has occurred (a state of the logical operator Z_{L} is inverted). When the decoder 44 determines that logical inversion has occurred, the decoder 44 inverts the state of the logical operator Z_{L} in a classical manner (Z_{L} → -Z_{L}). As a result, the logical operator Z_{L} is recognized as being in a correct state. That is, decoding succeeds.

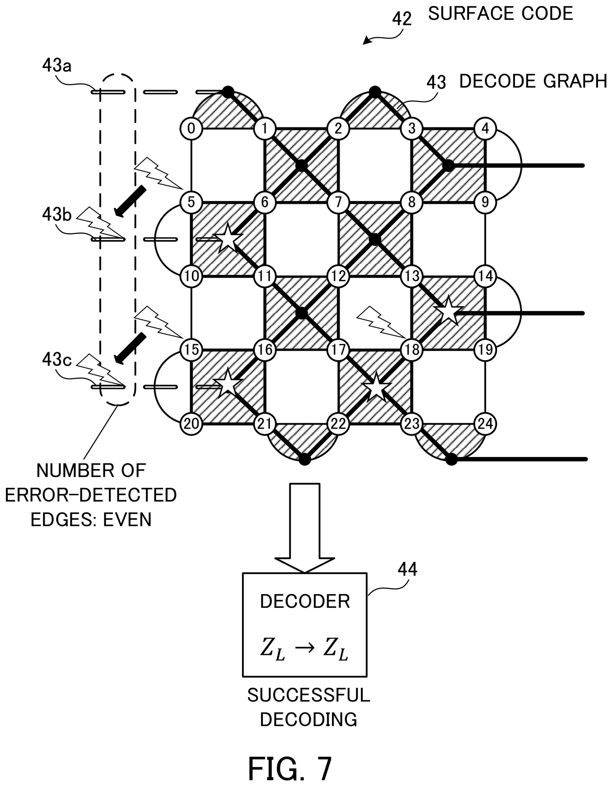

FIG. 7 illustrates a second example of error detection. In the example of FIG. 7, errors occur in data qubits numbered 5, 15, and 18. In this case, detection events occur at one ancilla qubit adjacent to the data qubit numbered 5, one ancilla qubit adjacent to the data qubit numbered 15, and two ancilla qubits adjacent to the data qubit numbered 18.

At this time, a state of the logical operator Z_{L} becomes "Z_{L} - Z₀(-Z₅)Z₁₀(-Z₁₅)Z₂₀ = Z₀Z₅Z₁₀Z₁₅Z₂₀ = Z_{L}" - That is, the state of the logical operator Z_{L} is not inverted.

The decoder 44 counts a number of edges among the edges 43a to 43c in which errors are detected. In the example of FIG. 7, the number of edges in which errors are detected is two (even). The decoder 44 correctly determines that logical inversion has not occurred, and does not perform classical correction processing (Z_{L} → Z_{L}). As a result, decoding succeeds.

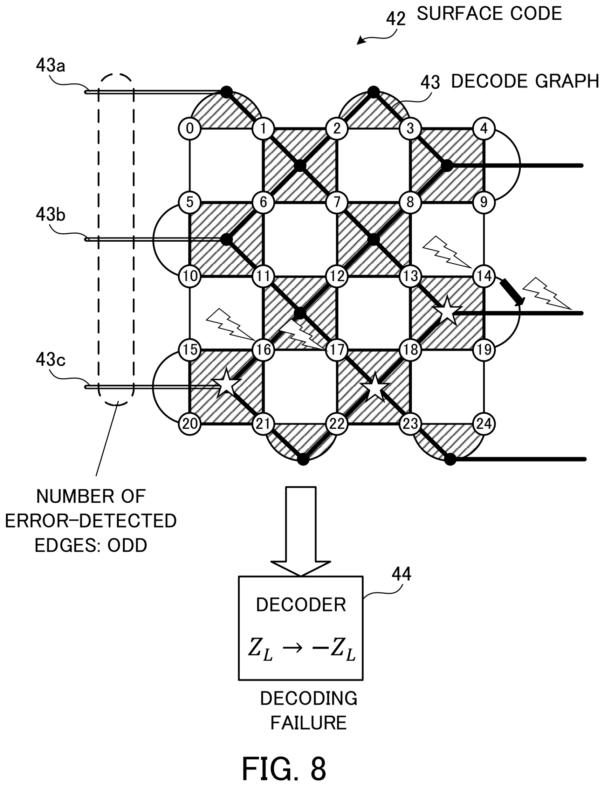

FIG. 8 illustrates a third example of error detection. In the example of FIG. 8, errors occur in data qubits numbered 14, 16, and 17. In this case, a detection event occurs in one ancilla qubit adjacent to the data qubit numbered 14. In addition, among two ancilla qubits adjacent to the data qubit numbered 16, a detection event occurs in an ancilla qubit not adjacent to the data qubit numbered 17. Further, among two ancilla qubits adjacent to the data qubit numbered 17, a detection event occurs in one ancilla qubit not adjacent to the data qubit numbered 16.

A state of an ancilla qubit adjacent to both the data qubit numbered 16 and the data qubit numbered 17 is inverted twice by inversion of states of two data qubits among four adjacent data qubits, and therefore returns to the original state. Accordingly, no detection event occurs in the ancilla qubit adjacent to both the data qubit numbered 16 and the data qubit numbered 17.

At this time, a state of the logical operator Z_{L} becomes "Z_{L} - Z₀Z₅Z₁₀Z₁₅Z₂₀ = Z₀Z₅Z₁₀Z₁₅Z₂₀ = Z_{L}". That is, the state of the logical operator Z_{L} is not inverted.

The decoder 44 counts a number of edges among the edges 43a to 43c in which errors are detected. In the example of FIG. 8, the number of edges in which errors are detected is one (odd). The decoder 44 erroneously determines that logical inversion has occurred, and performs classical correction processing (Z_{L} → -Z_{L}). As a result, decoding fails.

As described above, when presence or absence of logical inversion is determined as either "inversion present" or "inversion absent" (binary), decoding may fail. Accordingly, calculation of a probability that logical inversion is present and a probability that logical inversion is absent is considered.

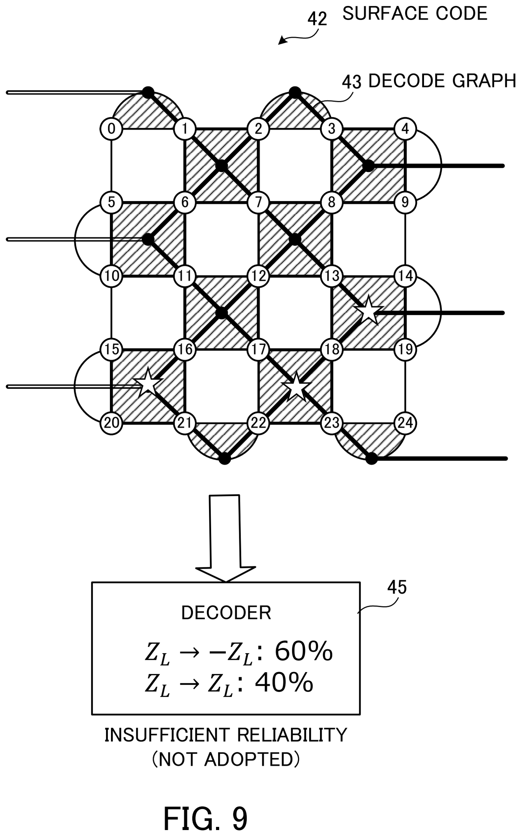

FIG. 9 illustrates an example of probability calculation for presence or absence of logical inversion. In the example of FIG. 9, the vertices at which detection events occur are the same as in the example of FIG. 8. For such detection-event occurrences, there exist multiple error occurrence patterns of data qubits. Among these error occurrence patterns, there are patterns in which logical inversion of the logical operator Z_{L} occurs and patterns in which logical inversion of the logical operator Z_{L} does not occur.

In this case, a decoder 45 calculates probabilities of presence and absence of logical inversion of the logical operator Z_{L}. In the example of FIG. 9, the probability that logical inversion has occurred is 60%, and the probability that logical inversion has not occurred is 40%. In this case, when classical correction processing is performed assuming that logical inversion has occurred (Z_{L} → -Z_{L} decoding fails with a probability of 40%. Accordingly, since reliability is low, the decoder 45 discards the state of the logical qubit indicated by the surface code 42.

Processing for discarding the state of a logical qubit corresponds to processing in which the state is not selected in post-selection. When the state of the logical qubit indicated by the surface code 42 is discarded, quantum computation is retried, for example. In addition, in preparation of a logical qubit state used for magic state distillation, when states are prepared in parallel using a plurality of logical qubits, the state of a logical qubit having higher reliability is used for magic state distillation.

As described above, by outputting probabilities of presence or absence of logical inversion instead of outputting presence or absence of logical inversion in a binary manner, decoding failures are suppressed. By suppressing decoding failures, reliability of calculation results in quantum computation is improved.

However, in order to output probabilities of presence or absence of logical inversion, all possibilities in which logical inversion occurs and all possibilities in which logical inversion does not occur are examined. Accordingly, the amount of calculation for computing probabilities of presence or absence of logical inversion is large. Error detection based on syndrome measurement is performed repeatedly during execution of a quantum circuit. When calculation of probabilities of presence or absence of logical inversion takes a long time, the total calculation time of the quantum circuit is prolonged. Quantum circuit computation fails unless execution is completed within a time during which quantum states are maintained (coherence time). Therefore, in order to perform post-processing using probabilities of presence or absence of logical inversion, it is desirable that calculation of probabilities of presence or absence of logical inversion be executable in an exceptionally short time.

Accordingly, the classical computer 100 according to the second embodiment achieves high-speed execution of calculation of probabilities of presence or absence of logical inversion. For example, the classical computer 100 calculates probabilities in an approximate manner instead of strictly calculating probabilities of presence or absence of logical inversion. In addition, the classical computer 100 enables parallel processing by calculating probabilities of presence or absence of logical inversion using a calculation algorithm suitable for parallel computation.

Non-patent literature 2 described above proposes a decoder that is executable at high speed by parallel operation on a field programmable gate array (FPGA). However, the decoder described in that literature outputs presence or absence of logical inversion in a binary manner and therefore is not applicable to calculation of probabilities of presence or absence of logical inversion. Moreover, the decoder described in that literature has a drawback in that a very large number of cores (processing elements) are needed for parallel operation.

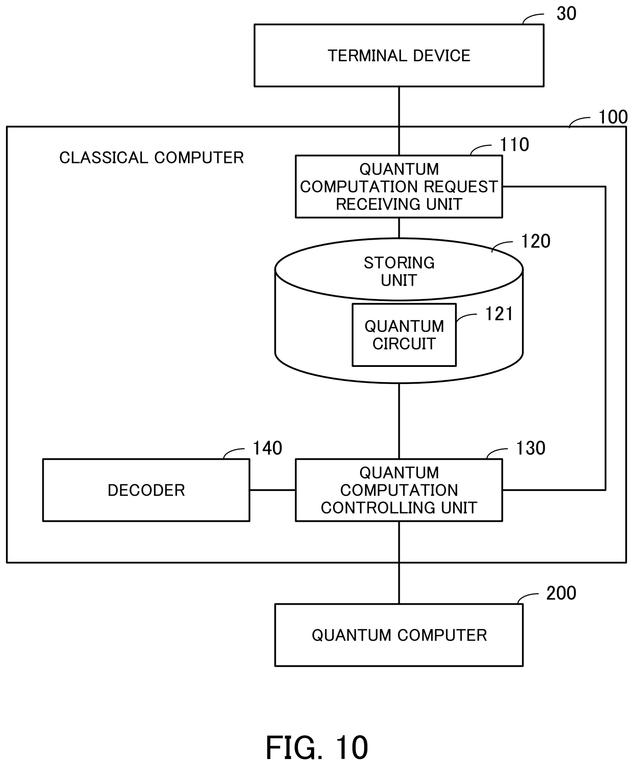

FIG. 10 is a block diagram illustrating an example of functions provided in a classical computer for supporting quantum computation. The classical computer 100 includes a quantum computation request receiving unit 110, a storing unit 120, a quantum computation controlling unit 130, and a decoder 140.

The quantum computation request receiving unit 110 receives, from the terminal device 30, a quantum computation request for solving a predetermined problem by quantum computation. The quantum computation request includes, for example, a quantum circuit 121 indicating a quantum computation procedure for solving the target problem. The quantum computation request receiving unit 110 stores the quantum circuit 121 included in the quantum computation request in the storing unit 120. In addition, when receiving a quantum computation result from the quantum computation controlling unit 130, the quantum computation request receiving unit 110 transmits the quantum computation result to the terminal device 30.

The storing unit 120 stores information used for quantum computation. For example, the storing unit 120 stores the quantum circuit 121 to be calculated. The storing unit 120 is, for example, the memory 102 or the storage device 103.

The quantum computation controlling unit 130 controls the quantum computer 200 in accordance with the quantum circuit 121. For example, the quantum computation controlling unit 130 causes the quantum computer 200 to execute quantum gate operations indicated in the quantum circuit 121 using logical qubits. The quantum computation controlling unit 130 obtains a solution to the target problem based on execution results of the quantum circuit 121 and transmits the obtained solution to the quantum computation request receiving unit 110.

In addition, during execution of the quantum circuit 121, the quantum computation controlling unit 130 causes the quantum computer 200 to execute syndrome measurement for detecting errors of logical qubits. The quantum computation controlling unit 130 transmits syndrome measurement results to the decoder 140 and acquires decoding results from the decoder 140, and thereafter executes quantum computation reflecting the decoding results.

Based on syndrome measurement results, the decoder 140 determines presence or absence of an error (logical inversion) of a logical qubit. When the logical qubit has not undergone logical inversion, the decoder 140 notifies the quantum computation controlling unit 130 that the current state of the logical qubit is a correct state. When the logical qubit has undergone logical inversion, the decoder 140 notifies the quantum computation controlling unit 130 that a state obtained by further inverting the current state of the logical qubit is a correct state.

Functions of the respective elements illustrated in FIG. 10 are realized, for example, by causing the processor 101 to execute program modules corresponding to the respective elements.

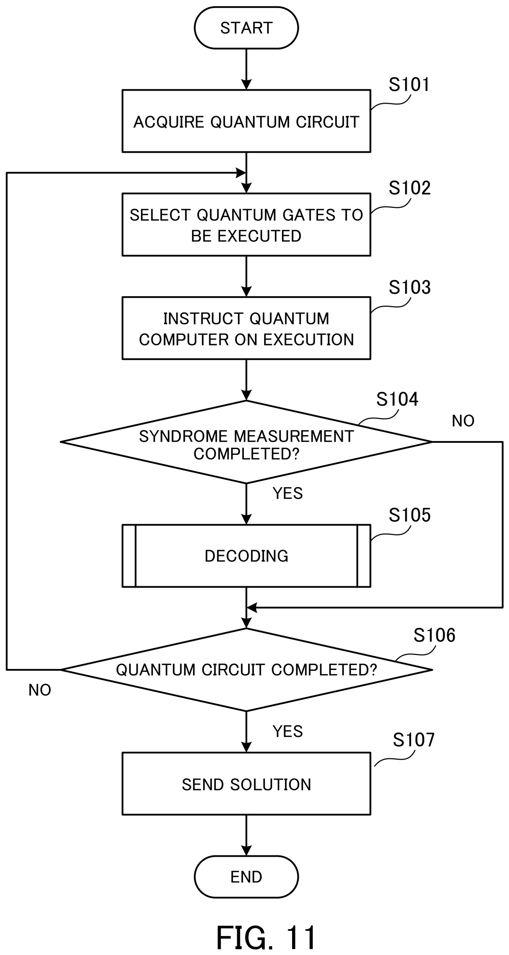

Next, a procedure of quantum computation support processing in the classical computer 100 is described with reference to FIG. 11.

FIG. 11 is a flowchart illustrating an example of a procedure of quantum computation support processing. Processing illustrated in FIG. 11 is described below in accordance with step numbers.

[Step S101] The quantum computation request receiving unit 110 acquires the quantum circuit 121 to be executed. For example, the quantum computation request receiving unit 110 acquires the quantum circuit 121 included in a quantum computation request received from the terminal device 30. The quantum computation request receiving unit 110 stores the acquired quantum circuit 121 in the storing unit 120 and instructs the quantum computation controlling unit 130 to execute the quantum circuit 121.

[Step S102] The quantum computation controlling unit 130 selects, in order from the beginning of the quantum circuit 121, one or more quantum gates to be executed simultaneously as operation targets. The quantum computation controlling unit 130 may also select a quantum state measurement operation as an operation target.

When a timing for executing syndrome measurement (for example, a predetermined time interval) is reached, the quantum computation controlling unit 130 selects, as an operation target, a gate operation of a quantum gate or a measurement operation included in a quantum circuit for syndrome measurement.

[Step S103] The quantum computation controlling unit 130 instructs the quantum computer 200 to execute the selected quantum gate operation or measurement operation.

[Step S104] The quantum computation controlling unit 130 determines whether syndrome measurement has been completed. For example, when a measurement operation in the quantum circuit for syndrome measurement is executed in the quantum computer 200 and measurement results are obtained, the quantum computation controlling unit 130 determines that syndrome measurement has been completed. When syndrome measurement has been completed, the quantum computation controlling unit 130 advances the processing to step S105. When syndrome measurement has not been completed, the quantum computation controlling unit 130 advances the processing to step S106.

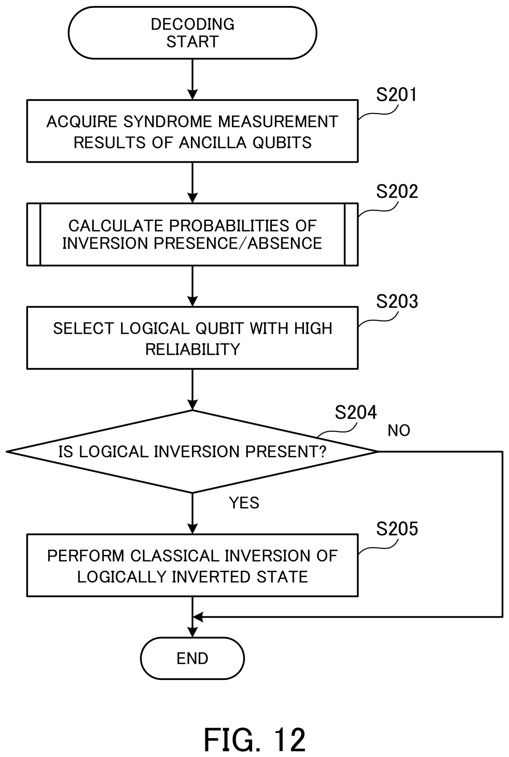

[Step S105] The decoder 140 performs decoding of the state of a logical qubit based on syndrome measurement results. Details of decoding processing are described later with reference to FIG. 12.

[Step S106] The quantum computation controlling unit 130 determines whether all operations indicated in the quantum circuit 121 have been completed. When all the operations are completed, the quantum computation controlling unit 130 advances the process to step S107. When there remain operations that have not been completed, the quantum computation control unit 130 advances the process to step S102.

[Step S107] The quantum computation controlling unit 130 obtains a solution to the target problem based on execution results of the quantum circuit 121. The quantum computation controlling unit 130 transmits the obtained solution to the quantum computation request receiving unit 110, and the quantum computation request receiving unit 110 transmits the solution to the terminal device 30.

As described above, syndrome measurement is performed during execution of the quantum circuit 121, and decoding processing is executed each time syndrome measurement is completed. For example, when states for use in magic state distillation are generated by a plurality of logical qubits, syndrome measurement results for the respective logical qubits are acquired, and among the plurality of logical qubits, states of logical qubits having high reliability of probabilities of presence and absence of logical inversion are decoded and used for magic state distillation.

FIG. 12 is a flowchart illustrating an example of a procedure of decoding processing. Processing illustrated in FIG. 12 is described below in accordance with step numbers.

[Step S201] The decoder 140 acquires syndrome measurement results of ancilla qubits included in a surface code constituting a logical qubit.

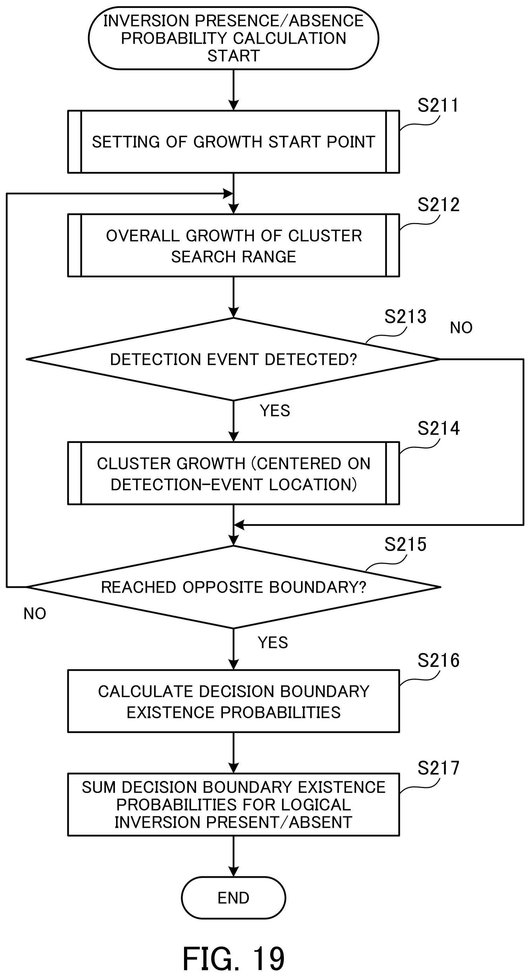

[Step S202] The decoder 140 calculates probabilities of presence and absence of inversion of the state of the logical qubit. Details of inversion presence/absence probability calculation processing are described later with reference to FIG. 19.

[Step S203] The decoder 140 selects, from among a plurality of logical qubits, a logical qubit for which either a probability that logical inversion has occurred or a probability that logical inversion has not occurred is equal to or greater than a predetermined value (high reliability).

[Step S204] Based on results of the inversion presence/absence probability calculation for the selected logical qubit, the decoder 140 determines whether the state of the logical qubit (a state represented by a logical operator of Z or X) has undergone logical inversion. For example, when the probability that logical inversion has occurred is equal to or greater than a predetermined value, the decoder 140 determines that logical inversion has occurred. When logical inversion has occurred, the decoder 140 advances the process to step S205. When the state has not undergone logical inversion, the decoder 140 ends the decoding process.

[Step S205] The decoder 140 inverts the state of the logical qubit that has undergone logical inversion by classical calculation. For example, when the Z-basis state represented by the logical operator Z_{L} of a logical qubit subjected to syndrome measurement has undergone inversion, the decoder 140 notifies the quantum computation controlling unit 130 that the Z-basis of the logical qubit has undergone inversion. When calculating a solution to the target problem based on execution results of the quantum circuit 121, the quantum computation controlling unit 130 inverts, by classical calculation, the state of a logical qubit that has undergone inversion, and calculates the solution to the problem.

As described above, by inversion presence/absence probability calculation processing, probabilities of presence or absence of inversion of the state of a logical qubit are obtained, and reliability of the state of the logical qubit is clarified. By continuing quantum computation using a state of a logical qubit having high reliability, calculation accuracy of quantum computation is improved.

In the example of FIG. 12, a logical qubit having high reliability is selected from among a plurality of logical qubits. However, there may be cases in which no logical qubit having high reliability is obtained. In such cases, decoding fails and execution of the quantum circuit is retried.

Next, a method for calculating probabilities of presence and absence of logical inversion will be described.

The inversion-presence/absence probability calculated by the decoder 140 is considered to be a likelihood that logical inversion has occurred. Accordingly, an inversion probability of a logical qubit is represented using Bayes' theorem. For example, a case is assumed where an occurrence pattern of vertex values is given as D₁ = d₁, D₂ = d₂, ···, Dₙ = dₙ (dᵢ ∈ {0, 1}). A posterior probability of logical inversion being present (Z_{L} → -Z_{L}) is represented by Bayes' theorem as Expression (1) below (Pr indicates a probability). 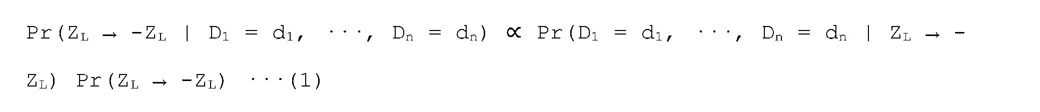 Pr(ZL → -ZL | D1 = d1, ···, Dn = dn) ∞ Pr(D1 = d1, ···, Dn = dn | ZL → - ZL) Pr (ZL → -ZL) (1)

Similarly, a posterior probability of logical inversion being absent (Z_{L} → Z_{L}) is represented by Bayes' theorem as Expression (2) below. 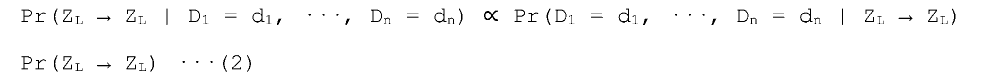 Pr(ZL → ZL | D1 = d1, ···, Dn = dn) ∞ Pr(D1 = d1, ···, Dn = dn | ZL → ZL) Pr(ZL → ZL) (2)

By calculating the right-hand side of Expression (1), a probability that logical inversion has occurred is obtained. Also, by calculating the right-hand side of Expression (2), a probability that logical inversion has not occurred is obtained.

Expression (1) for the probability that logical inversion has occurred is expanded into a plurality of terms representing, for each error occurrence pattern that produces the detected occurrence pattern of detection events, an occurrence probability for that error occurrence pattern.

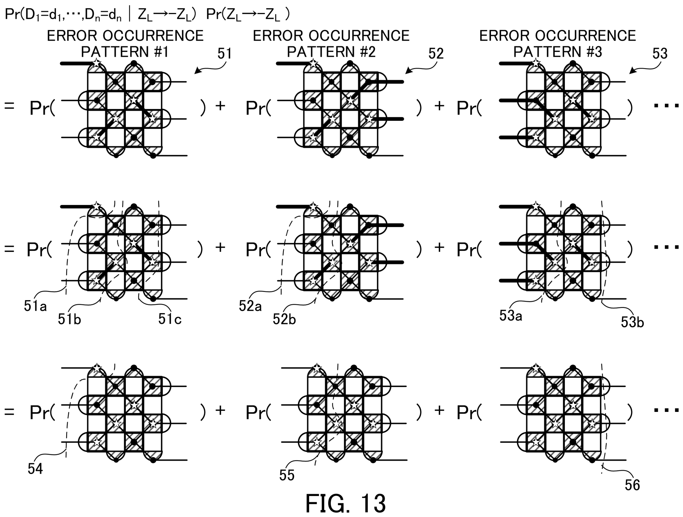

FIG. 13 illustrates an example of a method for calculating the probability that logical inversion has occurred. The upper row of FIG. 13 indicates an example of expansion of Expression (1) representing the probability that logical inversion has occurred. Locations where detection events occur are indicated by star marks. In the example of FIG. 13, detection events occur at five vertices. Edges that correspond to locations where errors occur and that connect the locations where detection events occur (star marks) are indicated by thick lines.

The probability indicated in Expression (1) is expanded into a sum of occurrence probabilities of all error occurrence patterns 51, 52, 53, and so on that reproduce the occurrence pattern of the detection-event locations and cause logical inversion. For example, regarding the term immediately after the equal sign (the error occurrence pattern 51), when a probability that an error occurs on one edge is p, the error occurrence pattern 51 occurs with a probability of p³ because three thick lines are present.

The middle row of FIG. 13 indicates dashed lines drawn for each of the error occurrence patterns 51, 52, 53, and so on. Each dashed line vertically traverses the decode graph from top to bottom without passing through edges at error occurrence locations. When the number of detection-event locations (star marks) present on the left side of the dashed line (the logical-boundary side) is odd, an odd number of errors occurs on edges for determining logical inversion (edges protruding leftward). This indicates occurrence of logical inversion. On the other hand, when the number of detection-event locations present on the left side of the dashed line is even, an even number of errors occurs on the edges for determining logical inversion (edges protruding leftward). That is, logical inversion does not occur.

In this manner, depending on where a dashed line is drawn, it is determined whether an error occurring at a detection-event location on the left side of the dashed line contributes to an error on an edge used for determining logical inversion. Therefore, in accordance with a context of machine learning, the dashed line is hereinafter referred to as a "decision boundary". The decision boundary corresponds to the boundary lines 5a and 5b in the first embodiment.

For example, three decision boundaries 51a to 51c may be set for the error occurrence pattern 51. Two decision boundaries 52a and 52b may be set for the error occurrence pattern 52. Two decision boundaries 53a and 53b may be set for the error occurrence pattern 53.

The lower row of FIG. 13 indicates a probability calculation method based on decision boundaries. The lower row is obtained by transforming the calculation of the middle row (the sum of occurrence probabilities for each error occurrence pattern) into a sum of existence probabilities of decision boundaries.

Here, the decision boundary 51a of the error occurrence pattern 51 and the decision boundary 52a of the error occurrence pattern 52 are represented by the same line. Therefore, existence probabilities of the decision boundaries 51a and 52a are integrated into an existence probability of a decision boundary 54 obtained by combining those decision boundaries 51a and 52a. Similarly, decision boundaries of different error occurrence patterns that are represented by the same line are integrated. A sum of existence probabilities of integrated decision boundaries 54, 55, 56, and so on is the probability that logical inversion has occurred.

Although the example indicated in FIG. 13 is the probability that logical inversion has occurred, similarly, the probability that logical inversion has not occurred is obtainable as a sum of existence probabilities of decision boundaries. In this manner, by introducing a concept of decision boundaries and calculating probabilities of presence and absence of logical inversion, efficient calculation is possible.

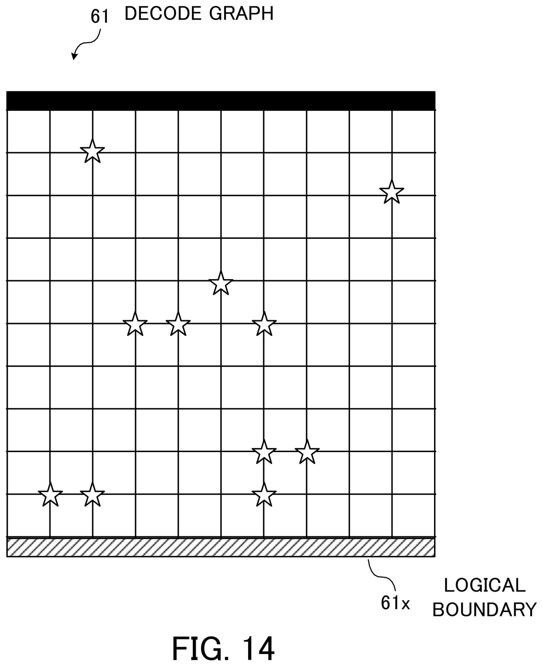

A decision boundary in a decode graph may be determined, for example, based on clusters of vertices at which detection events occur. A cluster may be identified, for example, by growth of a cluster search range from a logical boundary. Hereinafter, a method for generating clusters will be described with reference to FIGS. 14 to 15.

FIG. 14 illustrates an example of a decode graph. In a decode graph 61, a lower boundary is a logical boundary 61x. In the decode graph 61, detection events occur at 11 locations. Here, clusters are considered based on matching relationships among vertices at which detection events occur. Matching is a process of searching for an error occurrence pattern that explains the occurrence of detection events. Vertices having a matching relationship are a plurality of vertices at which detection events may have occurred due to a common error.

A surface code that is an origin of the decode graph 61 illustrated in FIG. 14 is a non-rotated surface code. In contrast, the surface code 42 illustrated in FIG. 4 is a rotated surface code. In the following description, a method for calculating probabilities of presence and absence of logical inversion will be described using an example of a non-rotated surface code. Probabilities of presence and absence of logical inversion are also calculated for a rotated surface code by a method similar to the method for the non-rotated surface code.

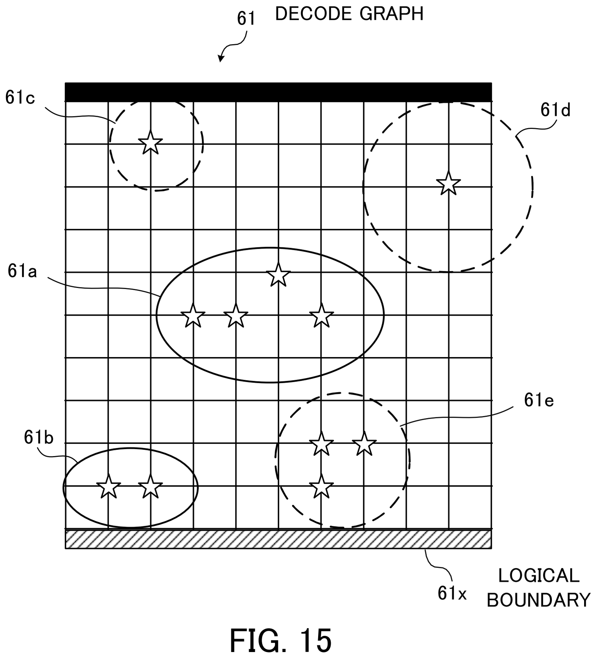

FIG. 15 illustrates an example of generated clusters. In the example of FIG. 15, five clusters 61a to 61e are generated. In the clusters 61a and 61b, the number of vertices at which detection events occur is even. In the clusters 61c to 61e, the number of vertices at which detection events occur is odd. In this manner, the clusters 61a to 61e are classified depending on whether the number of vertices at which detection events occur is even or odd.

Decision boundaries are determined based on the clusters 61a to 61e. Also, for calculation of an existence probability of a decision boundary, for example, distances from a cluster to the logical boundary, from a cluster to another boundary, and between clusters are used.

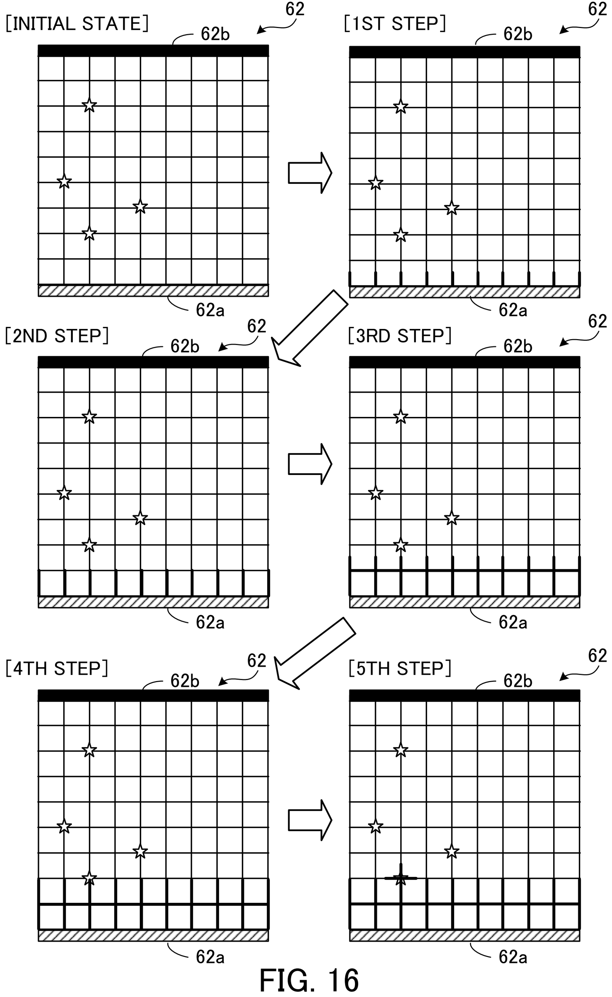

When generating clusters, for example, a cluster search is started from the logical boundary 61x. Cluster searches from respective vertices included in the logical boundary 61x are efficiently executed by parallel processing. Hereinafter, cluster generation processing will be described with reference to FIGS. 16 to 18.

FIG. 16 illustrates a first example of a method for cluster generation processing. In a decode graph 62, detection events occur at four locations. In an initial state before cluster generation, a cluster search is started from a logical boundary 62a in the decode graph 62 toward a boundary 62b opposite to the logical boundary 62a. Hereinafter, it is assumed that a cluster search range grows by a half-edge distance per step.

In a cluster search in the first step, by following edges of the decode graph 62 from each of a plurality of vertices belonging to the logical boundary 62a, a detection-event location or the other boundary 62b is searched. Since the decode graph 62 includes ten vertices in the logical boundary 62a, the search is executable in ten-way parallel. In the first step, the cluster search range has reached neither a detection-event location nor the boundary 62b.

Also in the second step, the cluster search range has reached neither a detection-event location nor the boundary 62b. Also in the third step, the cluster search range has reached neither a detection-event location nor the boundary 62b.

In the fourth step, the cluster search range has reached one of the detection-event locations. When the detection-event location is reached, the search is switched to cluster growth centered on the reached detection-event location.

In the fifth step, a cluster centered on the detection-event location reached in the fourth step is generated and a range of that cluster is expanded. Growth of the cluster search range at locations where detection-event locations have not been reached is stopped. In the fifth step, the cluster centered on the detection-event location reached in the fourth step has reached none of the detection-event locations, the logical boundary 62a, or the boundary 62b.

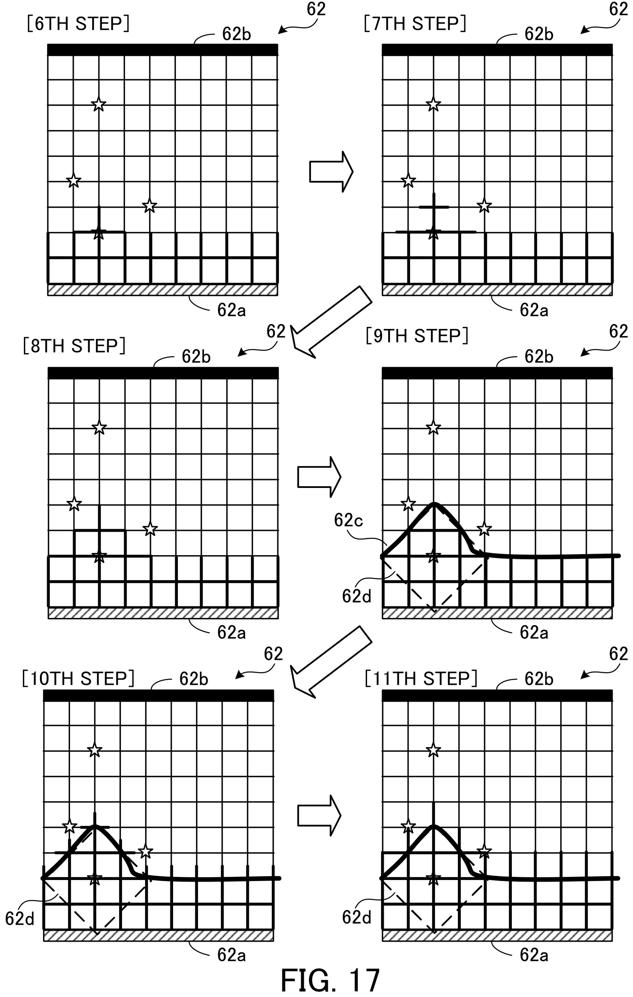

FIG. 17 illustrates a second example of the method for cluster generation processing. In the sixth step, growth of the cluster centered on the detection-event location reached in the fourth step is continued. In the sixth step, the cluster has reached none of the detection-event locations, the logical boundary 62a, or the boundary 62b.

In the seventh step, growth of the cluster centered on the detection-event location reached in the fourth step is continued. In the seventh step, the cluster has reached none of the detection-event locations, the logical boundary 62a, or the boundary 62b.

In the eighth step, growth of the cluster centered on the detection-event location reached in the fourth step is continued. In the eighth step, the cluster has reached none of the detection-event locations, the logical boundary 62a, or the boundary 62b.

In the ninth step, growth of the cluster centered on the detection-event location reached in the fourth step is continued. In the ninth step, the cluster has reached the logical boundary 62a. Therefore, growth of the cluster centered on the detection-event location ends. Then, an area of a cluster 62d is determined.

In the decode graph 62 in the ninth step, a search boundary 62c of the cluster search range is indicated by a thick line. Thereafter, growth of the cluster search range is performed with vertices on the search boundary 62c as starting points.

In the tenth step, the cluster search range has reached neither a detection-event location nor the boundary 62b. In the eleventh step, the cluster search range has reached two detection-event locations. Therefore, the cluster search is switched to growth of clusters centered on the two reached detection-event locations, respectively.

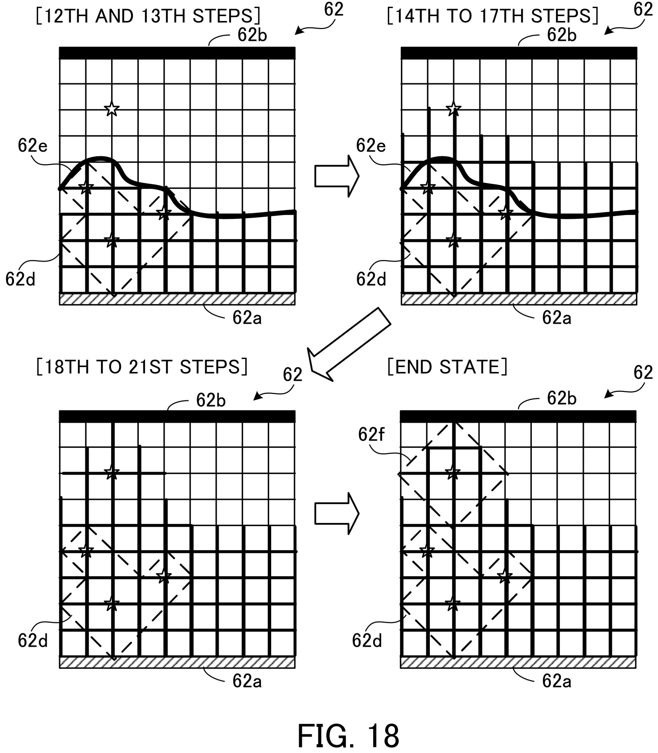

FIG. 18 illustrates a third example of the method for cluster generation processing. In the twelfth and thirteenth steps, clusters are expanded toward surroundings with each of the two detection-event locations reached in the eleventh step as respective centers. The clusters centered on the two detection-event locations reached in the eleventh step reach, in the thirteenth step, a range of the existing cluster 62d. As a result, the clusters centered on the two detection-event locations reached in the eleventh step are combined with the cluster 62d. As a result, a range of the cluster 62d is expanded. Then, growth of the cluster search range centered on the detection-event locations ends.

In the decode graph 62 in the twelfth and thirteenth steps, a search boundary 62e of the cluster search range is indicated by a thick line. Thereafter, search of the cluster search range is performed with vertices on the search boundary 62e as starting points.

When the cluster search range grows through the fourteenth to seventeenth steps, one of the detection-event locations is reached in the seventeenth step. When the detection-event location is reached, the cluster search is switched to growth centered on the reached detection-event location.

In the eighteenth to twenty-first steps, a range of a cluster is expanded toward surroundings with the detection-event location reached in the seventeenth step as a center. Growth of the cluster search range is not performed at locations where detection-event locations have not been reached. In the twenty-first step, the cluster centered on the detection-event location reached in the seventeenth step has reached the boundary 62b. Since the cluster has reached the boundary 62b, growth of the cluster ends. As a result, a new cluster 62f centered on the detection-event location reached in the seventeenth step is generated.

In this manner, two clusters 62d and 62f are generated. A decision boundary is obtained based on the generated clusters 62d and 62f, and an existence probability of the decision boundary is calculated. Then, based on the existence probability of the decision boundary, an inversion-presence/absence probability is calculated.

FIG. 19 is a flowchart illustrating an example of a procedure of inversion presence/absence probability calculation processing. Hereinafter, the processing illustrated in FIG. 19 will be described in accordance with step numbers.

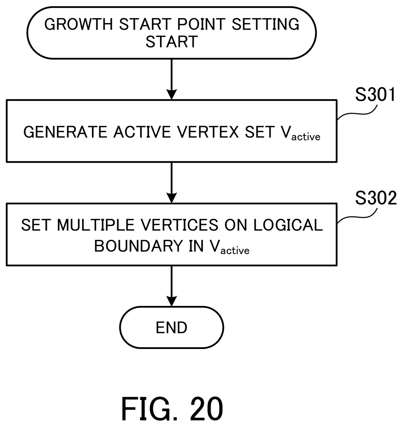

[Step S211] The decoder 140 sets a growth start point of a cluster search range. Details of the growth start point setting processing will be described later (see FIG. 20).

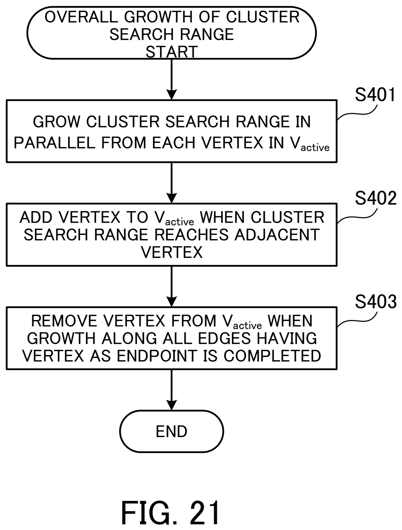

[Step S212] The decoder 140 performs overall growth of the cluster search range. Details of the overall growth processing of the cluster search range will be described later (see FIG. 21).

[Step S213] The decoder 140 determines whether a new detection event has been detected within the cluster search range. When a detection event has been detected, the decoder 140 advances the processing to step S214. When a detection event has not been detected, the decoder 140 advances the processing to step S215.

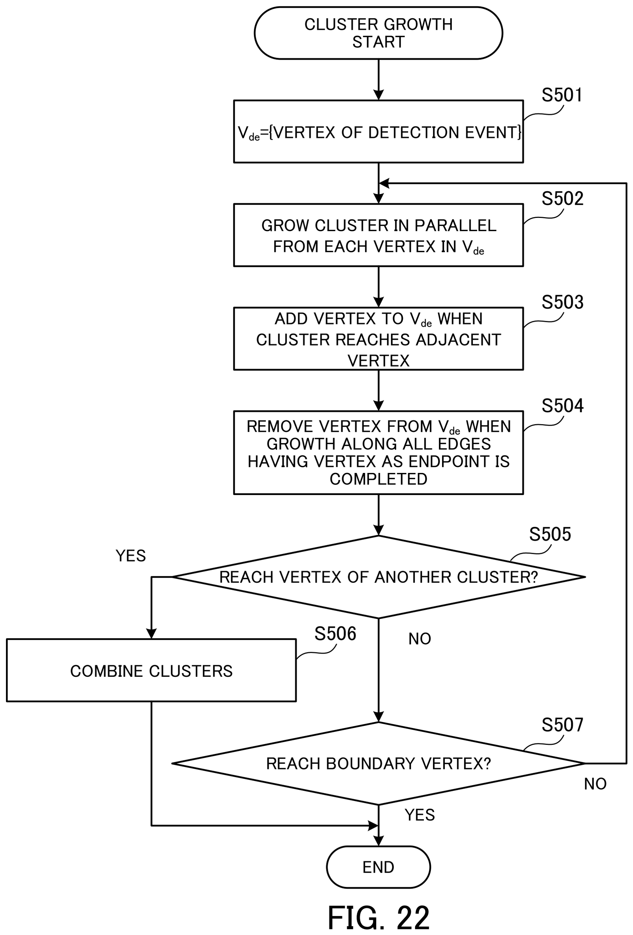

[Step S214] The decoder 140 performs cluster growth centered on a detection-event location in the cluster search range. Details of the cluster growth processing will be described later (see FIG. 22).

[Step S215] The decoder 140 determines whether the cluster search range has reached the other boundary on an opposite side from the logical boundary. When the other boundary has been reached, the decoder 140 advances the processing to step S216. When the other boundary has not been reached, the decoder 140 advances the processing to step S212.

[Step S216] The decoder 140 sets decision boundaries and calculates an existence probability of each decision boundary.

[Step S217] The decoder 140 sums existence probabilities of decision boundaries that contribute to a probability of logical inversion. The obtained sum becomes a probability that logical inversion has occurred. Further, the decoder 140 sums existence probabilities of decision boundaries that contribute to a probability that logical inversion has not occurred. The obtained sum becomes a probability that logical inversion has not occurred.

Through these procedures, probabilities of presence and absence of logical inversion are calculated. Next, setting processing of the growth start point of the cluster search range will be described in detail.

FIG. 20 is a flowchart illustrating an example of a procedure of growth start point setting processing. Hereinafter, the processing illustrated in FIG. 20 will be described in accordance with step numbers.

[Step S301] The decoder 140 generates a set V_{active} of active vertices. At this stage, V_{active} is an empty set.

[Step S302] The decoder 140 sets a plurality of vertices on the logical boundary in the set V_{active}.

When the growth start point is set, overall growth of the cluster search range is started.

FIG. 21 is a flowchart illustrating an example of a procedure of overall growth processing of the cluster search range. Hereinafter, the processing illustrated in FIG. 21 will be described in accordance with step numbers.

[Step S401] The decoder 140 grows the cluster search range in parallel from each vertex in the set V_{active} along edges having the vertex as an endpoint. At this time, the decoder 140 grows the cluster search range in parallel for each vertex included in the set V_{active} by using different processors (or processor cores).

[Step S402] When the cluster search range reaches an adjacent vertex through growth along an edge, the decoder 140 adds the reached vertex to the set V_{active}.

[Step S403] The decoder 140 confirms, for each vertex included in the set V_{active}, whether growth along all edges having the vertex as an endpoint has been completed. The decoder 140 removes, from the set V_{active}, vertices for which growth along all corresponding edges has been completed.

In this manner, overall growth of the cluster search range is performed by vertex-based parallel processing. When a detection event is detected by growth of the cluster search range, cluster growth is performed centered on the detection-event location.

FIG. 22 is a flowchart illustrating an example of a procedure of cluster growth processing. Hereinafter, the processing illustrated in FIG. 22 will be described in accordance with step numbers.

[Step S501] The decoder 140 sets, in a set V_{de}, a vertex corresponding to a detected detection event (V_{de} = {vertex of detection event}). A cluster centered on the vertex set in the set V_{de} in this step is generated.

[Step S502] The decoder 140 grows clusters in parallel from each vertex in the set V_{de} along edges having the vertex as an endpoint.

[Step S503] When a cluster reaches an adjacent vertex through growth along an edge, the decoder 140 adds the reached vertex to the set V_{de}.

[Step S504] The decoder 140 confirms, for each vertex included in the set V_{de}, whether growth along all edges having the vertex as an endpoint has been completed. The decoder 140 removes, from the set V_{de}, vertices for which growth along all edges having the vertex as an endpoint has been completed.

[Step S505] The decoder 140 determines whether a cluster centered on each vertex included in the set V_{de} has reached a vertex of another cluster by growth. When a vertex of another cluster has been reached, the decoder 140 advances the processing to step S506. When a vertex of another cluster has not been reached, the decoder 140 advances the processing to step S507.

[Step S506] The decoder 140 combines the growing cluster and another cluster having the vertex reached by growth into one cluster. Thereafter, the decoder 140 ends the cluster growth processing.

[Step S507] The decoder 140 determines whether a cluster centered on each vertex included in the set V_{de} has reached a vertex on a boundary. When a vertex on the boundary has been reached, the decoder 140 ends the cluster growth processing.

Through such processing, cluster growth is performed. Based on clusters, decision boundaries are generated, and decision-boundary existence probabilities are calculated. For setting decision boundaries, information such as distances between clusters is used, for example.

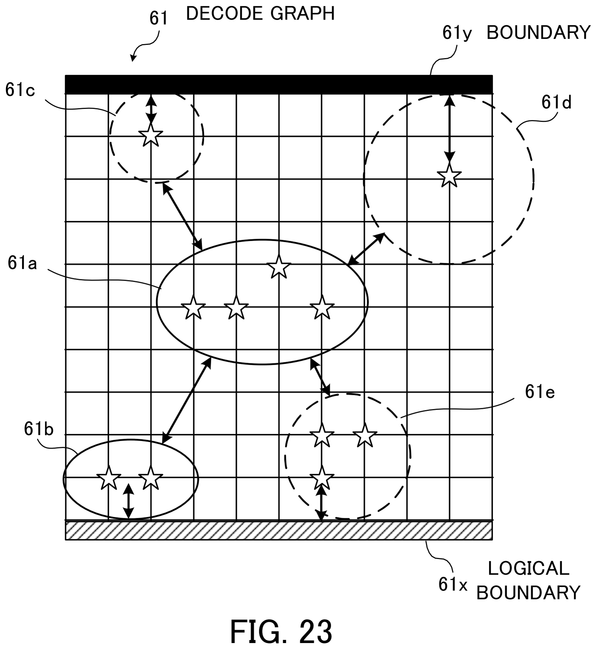

FIG. 23 illustrates an example of a method of measuring distances between clusters. A distance between clusters 61a to 61e is, for example, a shortest distance between detection-event locations of two clusters. A distance between two vertices is represented, for example, by a number of edges passed when tracing edges along a shortest path from one vertex to the other vertex.

The clusters 61b to 61e have stopped growing by reaching the logical boundary 61x or the other boundary 61y. For these clusters 61b to 61e, distances to the logical boundary 61x or the other boundary 61y are also considered. Distances from the clusters 61b and 61e to the logical boundary 61x are, for example, shortest distances between detection-event locations included in the clusters 61b and 61e and the logical boundary 61x. Distances from the clusters 61c and 61d to the boundary 61y are, for example, shortest distances between detection-event locations included in the clusters 61c and 61d and the boundary 61y.

In the calculation of distances between the clusters 61b to 61e and the logical boundary 61x or the boundary 61y, when another cluster lies in between, a path passing through the cluster is regarded as having a distance of "0".

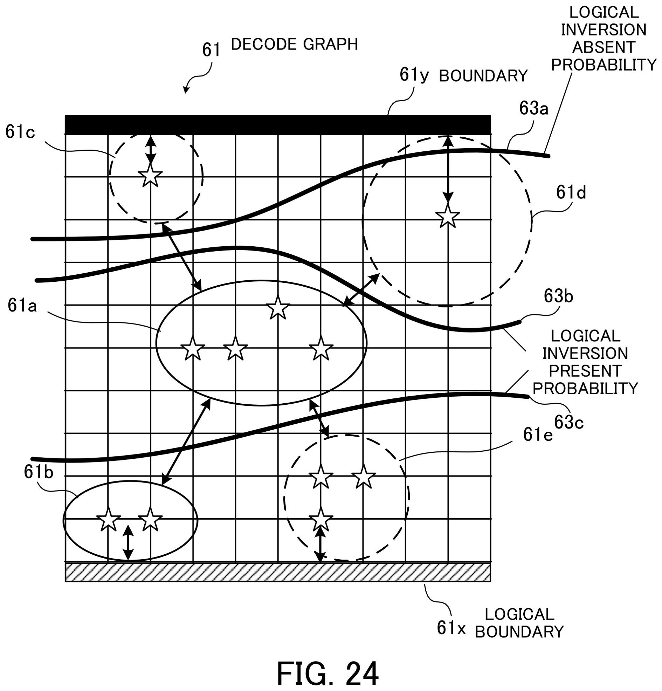

FIG. 24 illustrates an example of a method for detecting decision boundaries. Based on the generated clusters 61a to 61e, decision boundaries 63a to 63c are determined. The decision boundaries 63a to 63c are represented by lines provided between the logical boundary 61x and the other boundary 61y. In a case of a three-dimensional decode graph, decision boundaries of the decode graph are represented by surfaces. The decision boundaries 63a to 63c traverse the decode graph 61 from a left end to a right end. In addition, the decision boundaries 63a to 63c do not pass between detection-event locations belonging to an identical cluster.

Depending on whether the number of detection events occurring between each of the decision boundaries 63a to 63c and the logical boundary 61x is even or odd, it is determined whether existence of the corresponding decision boundary contributes to a probability of logical inversion absence or to a probability of logical inversion presence. An existence probability of the decision boundary 63a, for which the number of detection events occurring on the logical-boundary-61x side is even, contributes to the probability of logical inversion absence. Existence probabilities of the decision boundaries 63b and 63c, for which the number of detection events occurring on the logical-boundary-61x side is odd, contribute to the probability of logical inversion presence.

A sum of existence probabilities of decision boundaries contributing to the probability of logical inversion absence becomes the probability of logical inversion absence. A sum of existence probabilities of decision boundaries contributing to the probability of logical inversion presence becomes the probability of logical inversion presence.

In the example of FIG. 24, the decision boundaries 63a, 63b, and 63c are arranged in spaces assumed to have low matching probabilities between the clusters 61a to 61e. A space having a low matching probability refers to a space in which an existence probability of a pair of vertices forming a matching relationship across the space is low.

A pair of vertices forming a matching relationship refers to vertices at both ends of consecutive edges in which an error has occurred and at which detection events have occurred. An existence probability of a decision boundary set in a space assumed to have a low matching probability is obtained from, for example, distances between clusters, distances between clusters and boundaries, and distances between detection-event locations within clusters. A probability of a physical error occurring in a physical qubit is denoted by p.

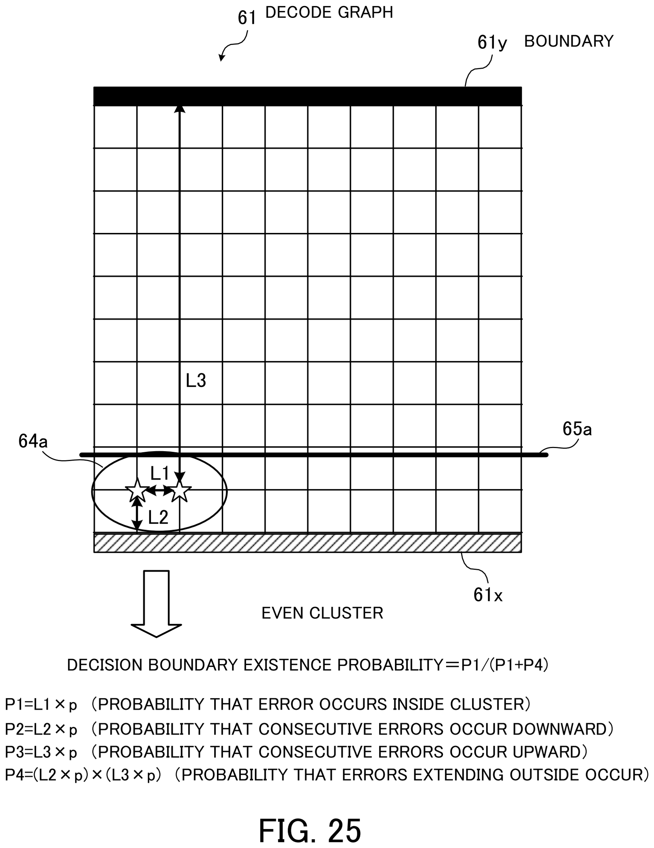

FIG. 25 illustrates an example of a method for calculating an existence probability of a decision boundary based on an even cluster. A cluster 64a is assumed to be located below a decision boundary 65a on the logical-boundary-61x side. The cluster 64a includes two detection-event locations. Accordingly, the cluster 64a is an even cluster.

A distance between vertices that are matchable only between detection-event locations within the cluster 64a located below the decision boundary 65a, represented by the number of traversed edges, is "L1 = 1". A probability that such matching is established is "L1 × p". That is, a probability P1 that detection events in the cluster 64a are generated only by errors within a region of the cluster 64a is "L1 × p".

A distance from detection-event locations within the cluster 64a to the logical boundary 61x is "L2 = 1". A probability P2 that such matching is established is "L2 × p". The probability P2 represents a probability that consecutive errors occur downward from the cluster 64a.

A distance from detection-event locations within the cluster 64a to the boundary 61y is "L3 = 9". A probability P3 that such matching is established is "L3 × p". The probability P3 represents a probability that consecutive errors occur upward from the cluster 64a.

A probability P4 that detection events in the cluster 64a are generated by consecutive errors extending from the cluster 64a to outside the cluster 64a is "(L2 × p) × (L3 × p)".

In such a case, an existence probability of the decision boundary 65a passing immediately above the cluster 64a is represented by "P1/(P1 + P4)". The existence probability of the decision boundary 65a contributes to the probability of logical inversion absence.

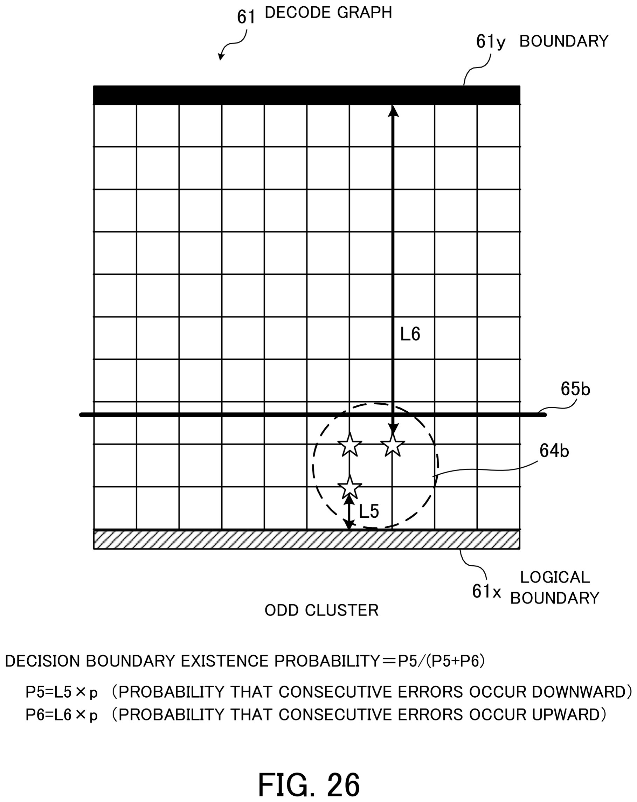

FIG. 26 illustrates an example of a method for calculating an existence probability of a decision boundary based on an odd cluster. A cluster 64b includes three detection-event locations. Accordingly, the cluster 64b is an odd cluster.

A distance from detection-event locations within the cluster 64b to the logical boundary 61x is "L5 = 1". A probability P5 that such matching is established is "L5 × p". The probability P5 represents a probability that consecutive errors occur downward from the cluster 64b.

A distance from detection-event locations within the cluster 64b to the boundary 61y is "L6 = 8". A probability P6 that such matching is established is "L6 × p". The probability P6 represents a probability that consecutive errors occur upward from the cluster 64b.

In such a case, an existence probability of a decision boundary 65b passing immediately above the cluster 64b is represented by "P5/(P5 + P6)". The existence probability of the decision boundary 65b contributes to the probability of logical inversion presence.

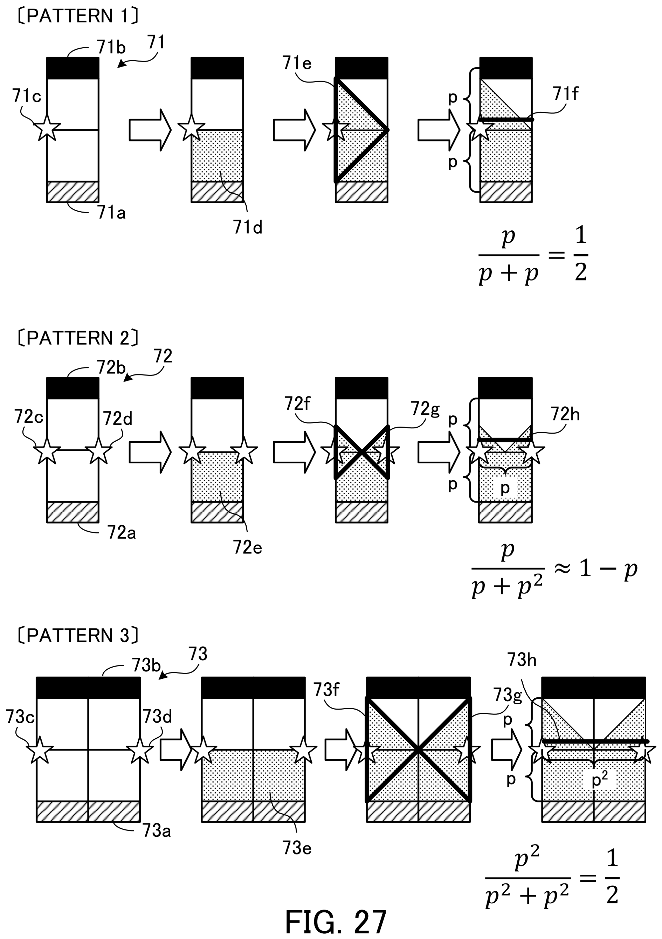

Hereinafter, with reference to FIGS. 27 to 29, probabilities of presence or absence of logical inversion based on generated clusters will be described in detail.

FIG. 27 is a first diagram illustrating examples of calculation of a probability of presence or absence of logical inversion based on generated clusters. In a decode graph 71 of [Pattern 1], a detection event occurs at one vertex 71c. A cluster search range 71d grows from a logical boundary 71a. When the cluster search range 71d reaches the vertex 71c, a cluster 71e grows with the vertex 71c as a center. When the cluster 71e reaches the logical boundary 71a or another boundary 71b, growth of the cluster 71e is stopped.

In this case, a decision boundary 71f is set above the vertex 71c. Since the number of detection-event locations included in the cluster 71e is one, the cluster 71e is an odd cluster. A probability that an error occurs on each edge along a path from the vertex 71c, which is a detection-event location, to the logical boundary 71a is "p". A probability that an error occurs on each edge along a path from the vertex 71c to the boundary 71b is also "p". Accordingly, an existence probability of the decision boundary 71f is "p/(p + p) = 1/2". The existence probability of the decision boundary 71f contributes to a probability that logical inversion occurs, and the probability is "1/2".

In a decode graph 72 of [Pattern 2], detection events occur at two vertices 72c and 72d. A cluster search range 72e grows from a logical boundary 72a. When the cluster search range 72e reaches the vertices 72c and 72d, clusters 72f and 72g grow with the vertices 72c and 72d as respective centers. When the cluster 72f and the cluster 72g collide, the clusters 72f and 72g are combined. When the combined cluster further grows and reaches the logical boundary 72a or another boundary 72b, growth of the cluster is stopped.

In this case, a decision boundary 72h is set above the vertices 72c and 72d. Since two detection-event locations are included in the combined cluster, the combined cluster is an even cluster. A probability that an error occurs on an edge between the vertices 72c and 72d, which are detection-event locations, is "p". A probability that an error occurs on an edge from the vertex 72c to the logical boundary 72a is also "p". A probability that an error occurs on an edge from the vertex 72c to the boundary 72b is also "p". Accordingly, an existence probability of the decision boundary 72h is "p/(p + p²) ≈ 1 - p". The existence probability of the decision boundary 72h contributes to a probability that logical inversion does not occur, and the probability is "1 - p".

In a decode graph 73 of [Pattern 3], detection events occur at two vertices 73c and 73d. A cluster search range 73e grows from a logical boundary 73a. When the cluster search range 73e reaches the vertices 73c and 73d, clusters 73f and 73g grow with the vertices 73c and 73d as respective centers. When the cluster 73f and the cluster 73g collide, the clusters 73f and 73g are combined. At a time of the combination, the combined cluster has already reached the logical boundary 73a and the boundary 73b, and growth of the combined cluster is stopped.

In this case, a decision boundary 73h is set above the vertices 73c and 73d. Since two detection-event locations are included in the combined cluster, the combined cluster is an even cluster. A probability that errors occur on each edge between the vertices 73c and 73d, which are detection-event locations, is "p²". A probability that an error occurs on an edge from the vertex 73c to the logical boundary 73a is "p". A probability that an error occurs on an edge from the vertex 73c to the boundary 73b is also "p". Accordingly, an existence probability of the decision boundary 73h is "p²/(p² + p²) = 1/2". The existence probability of the decision boundary 73h contributes to a probability that logical inversion does not occur, and the probability is "1/2".

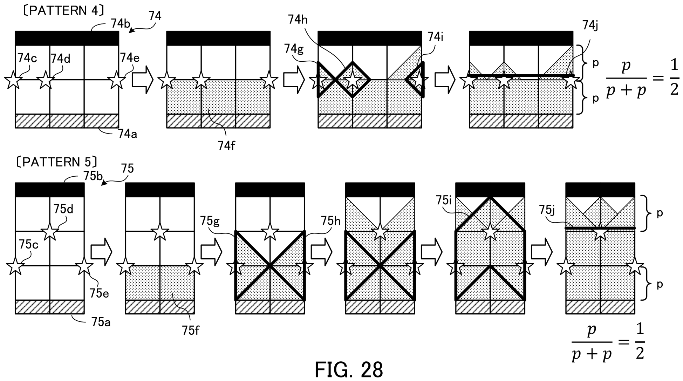

FIG. 28 is a second diagram illustrating examples of calculation of the probability of presence or absence of logical inversion based on generated clusters. In a decode graph 74 of [Pattern 4], detection events occur at three vertices 74c to 74e. A cluster search range 74f grows from a logical boundary 74a. When the cluster search range 74f reaches the vertices 74c to 74e, clusters 74g to 74i grow with the vertices 74c to 74e as respective centers. When the cluster 74g and the cluster 74h collide, the clusters 74g and 74h are combined. Growth of the combined cluster is stopped. The cluster 74i continues to grow, and growth of the cluster 74i is stopped when the cluster 74i reaches the logical boundary 74a and the boundary 74b.

In this case, for example, a decision boundary 74j is set above the vertices 74c to 74e. Since three detection-event locations are included in the combined cluster, the combined cluster is an odd cluster. A probability that an error occurs on each edge along a path from each of the vertices 74c to 74e, which are detection-event locations, to the logical boundary 74a is "p". A probability that an error occurs on each edge along a path from each of the vertices 74c to 74e to the boundary 74b is also "p". Accordingly, an existence probability of the decision boundary 74j is "p/(p + p) = 1/2". The existence probability of the decision boundary 74j contributes to a probability that logical inversion occurs, and the probability is "1/2".

In a decode graph 75 of [Pattern 5], detection events occur at three vertices 75c to 75e. A cluster search range 75f grows from a logical boundary 75a. When the cluster search range 75f reaches the vertices 75c and 75e, clusters 75g and 75h grow with the vertices 75c and 75e as respective centers. When the cluster 75g and the cluster 75h collide, the clusters 75g and 75h are combined. At a time of the combination, the combined cluster has already reached the logical boundary 75a and the boundary 75b, and growth of the combined cluster is stopped.

After growth of the cluster is stopped, the cluster search range 75f grows. When the cluster search range 75f reaches the vertex 75d, a cluster grows with the vertex 75d as a center. When the cluster grown from the vertex 75d reaches the clusters grown from the vertices 75c and 75e, the clusters are combined to form a cluster 75i. At a time of the combination, the cluster 75i has already reached the logical boundary 75a and the boundary 75b, and growth of the cluster 75i is stopped.

In this case, a decision boundary 75j is set above the vertices 75c to 75e. Since three detection-event locations are included in the cluster 75i, the cluster 75i is an odd cluster. A probability that an error occurs on each edge along a path from the vertices 75c and 75e, which are detection-event locations closer to the logical boundary 75a, to the logical boundary 75a is "p". A probability that an error occurs on each edge along a path from the vertex 75d, which is a detection-event location closer to the boundary 75b, to the boundary 75b is "p". Accordingly, an existence probability of the decision boundary 75j is "p/(p + p) = 1/2". The existence probability of the decision boundary 75j contributes to a probability that logical inversion occurs, and the probability is "1/2".

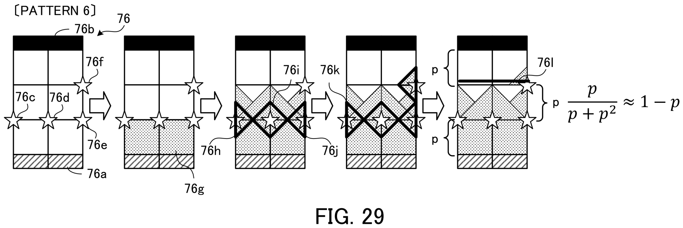

FIG. 29 is a third diagram illustrating an example of calculation of the probability of presence or absence of logical inversion based on generated clusters. In a decode graph 76 of [Pattern 6], detection events occur at four vertices 76c to 76f. A cluster search range 76g grows from a logical boundary 76a. When the cluster search range 76g reaches the vertices 76c to 76e, clusters 76h to 76j grow with the vertices 76c to 76e as respective centers. When the cluster 76h and the cluster 76i collide, the clusters 76h and 76i are combined. When the cluster 76i and the cluster 76j collide, the clusters 76i and 76j are also combined. Growth of the cluster is stopped by the combination.

After growth of the cluster is stopped, the cluster search range 76g grows. When the cluster search range 76g reaches the vertex 76f, a cluster grows with the vertex 76f as a center. When the cluster grown from the vertex 76f reaches the cluster obtained by combining the clusters 76h to 76j, the clusters are combined to form a cluster 76k, and growth of the cluster 76k is stopped. Thereafter, the cluster search range 76g grows and reaches the boundary 76b, and growth of the cluster search range 76g is stopped.

In this case, for example, a decision boundary 76l is set above the vertices 76c to 76f. Since four detection-event locations are included in the cluster 76k, the cluster 76k is an even cluster. A probability that an error occurs on an edge between the vertices 76e and 76f, which are detection-event locations, is "p". A probability that an error occurs on each edge along a path from the vertex 76c to the logical boundary 76a is "p". A probability that an error occurs on each edge along a path from the vertex 76f to the boundary 76b is also "p". Accordingly, an existence probability of the decision boundary 76l is "p/(p + p²) ≈ 1 - p". The existence probability of the decision boundary 76l based on the cluster 76k contributes to a probability that logical inversion does not occur, and the probability is "1 - p".

In FIGS. 27 to 29, only one decision boundary is set for each pattern. However, as illustrated in FIG. 24, a plurality of decision boundaries may be set. A sum of existence probabilities of decision boundaries for which the number of detection events occurring between each decision boundary and the logical boundary is even becomes a probability that logical inversion does not occur. A sum of existence probabilities of decision boundaries for which the number of detection events occurring between each decision boundary and the logical boundary is odd becomes a probability that logical inversion occurs.

When a plurality of clusters that are not finally combined are generated, existence probabilities of decision boundaries are calculated using distances between the clusters.

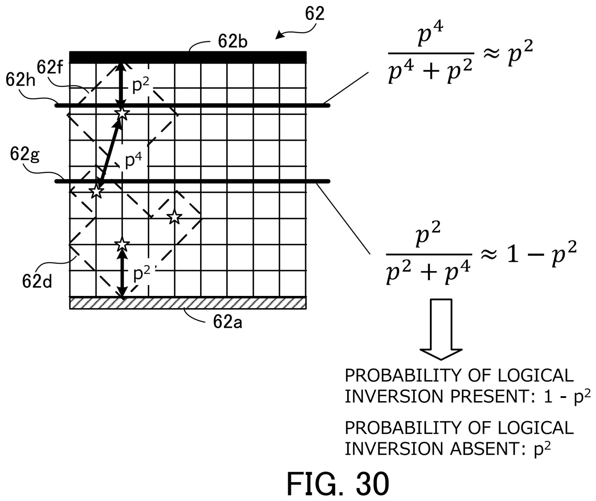

FIG. 30 illustrates an example of calculation results of existence probabilities of decision boundaries when a plurality of clusters are generated. For example, as illustrated in FIGS. 16 to 18, two clusters 62d and 62f are generated based on the decode graph 62. In this case, for example, two decision boundaries 62g and 62h are set.

The decision boundary 62g is set between the two clusters 62d and 62f. The number of detection events included in the cluster 62d located below the decision boundary 62g is "3", and the cluster 62d is an odd cluster. That is, the number of detection events occurring between the decision boundary 62g and the logical boundary 62a is "3" (odd).

Another cluster 62f exists between the cluster 62d and the boundary 62b. In this case, a probability that consecutive errors occur from the cluster 62d to the boundary 62b is calculated in accordance with a shortest distance between a detection-event location in the cluster 62d and a detection-event location in the cluster 62f. In the example of FIG. 30, the shortest distance between the detection-event location in the cluster 62d and the detection-event location in the cluster 62f is "4" (four edges). When a probability that an error occurs on one edge is p, a probability that consecutive errors occur from the cluster 62d to the boundary 62b is "p⁴".

A distance between the cluster 62d and the logical boundary 62a is "2". Therefore, a probability that consecutive errors occur from the cluster 62d to the logical boundary 62a is "p²". As a result, an existence probability of the decision boundary 62g set above the cluster 62d is "p²/(p² + p⁴) ≈ 1 - p²".

The decision boundary 62h is set above the two clusters 62d and 62f. The total number of detection events included in the clusters 62d and 62f located below the decision boundary 62h is "4". That is, the number of detection events occurring between the decision boundary 62h and the logical boundary 62a is "4" (even).

Another cluster 62d exists between the cluster 62f and the logical boundary 62a. In this case, a probability that consecutive errors occur from the cluster 62f to the logical boundary 62a is calculated in accordance with a shortest distance between a detection-event location in the cluster 62f and a detection-event location in the cluster 62d. In the example of FIG. 30, the shortest distance between the detection-event location in the cluster 62f and the detection-event location in the cluster 62d is "4". A probability that consecutive errors occur from the cluster 62f to the logical boundary 62a is "p⁴".

A shortest distance between the detection-event location in the cluster 62f and the boundary 62b is "2". Accordingly, a probability that consecutive errors occur from the cluster 62f to the boundary 62b is "p²". Then, an existence probability of the decision boundary 62h set above the cluster 62f is "p⁴/(p⁴ + p²) ≈ p²".

As a result, a probability that logical inversion occurs is "1 - p²", and a probability that logical inversion does not occur is "p²".

As described above, a probability that logical inversion occurs and a probability that logical inversion does not occur are obtained. These probabilities are calculated based on existence probabilities of decision boundaries. Existence probabilities of decision boundaries are readily calculated from distances between clusters. Therefore, presence or absence of logical inversion is evaluated at high speed.

Further, growth of a cluster search region is executed in parallel for each edge in a growth direction. By executing growth processing of the cluster search range in parallel, detection-event locations that become centers of clusters are efficiently identified.

### (c) Other Embodiments

The method for growing clusters is not limited to the method illustrated in the second embodiment. For example, when two clusters are combined, the clusters may be further grown by one additional step (for example, by one edge length).

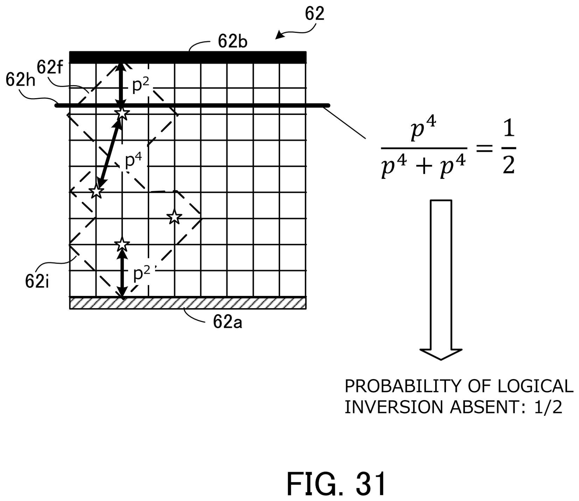

FIG. 31 illustrates an example of a cluster growth method. When cluster generation is performed in the decode graph 62, the shape of the cluster 62d illustrated in FIG. 30 may be further grown into a cluster 62i illustrated in FIG. 31. For example, when two clusters are combined, the decoder 140 grows the combined cluster upward, for example, in a direction toward the other boundary 62b. When such a cluster 62i is generated, the cluster 62i is combined with the cluster 62f through growth of the cluster 62f.

In this case, the decision boundary 62h is generated. Since the cluster 62i and the cluster 62f are combined into one cluster, a cluster in which detection events occur at four locations (an even number) exists below the decision boundary 62h. Accordingly, an existence probability of the decision boundary 62h is expressed as "p⁴/(p⁴ + p⁴) = 1/2". That is, a logical inversion does not occur with a probability of 1/2.

The decoder 140 may calculate the existence probability of a decision boundary by a method different from the method in the second embodiment. For example, in calculation of the existence probability of a decision boundary based on an even cluster, the decoder 140 may use a cluster growth distance centered on a detection-event location.

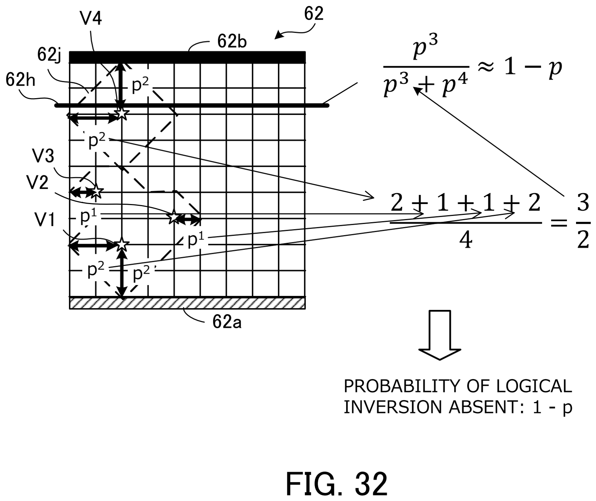

FIG. 32 illustrates an example of a method for calculating an existence probability of a decision boundary. A cluster 62j is a cluster generated by combining the cluster 62i and the cluster 62f illustrated in FIG. 31. In the cluster 62j, detection events occur at four vertices V1 to V4.

The decoder 140 obtains a size of a cluster when cluster generation is performed with each of the vertices V1 to V4 as a center. The cluster size is, for example, a radius (the number of edges) of a circumscribed circle of the cluster. For example, a size of a cluster grown with the vertex V1 as a center is "2". In this case, a probability that consecutive errors occur around the vertex V1 by the size of the cluster grown with the vertex V1 as the center is "p²".

A size of a cluster grown with the vertex V2 as a center is "1". In this case, a probability that consecutive errors occur around the vertex V2 by the size of the cluster grown with the vertex V2 as the center is "p¹".

A size of a cluster grown with the vertex V3 as a center is "1". In this case, a probability that consecutive errors occur around the vertex V3 by the size of the cluster grown with the vertex V3 as the center is "p¹".

A size of a cluster grown with the vertex V4 as a center is "2". In this case, a probability that consecutive errors occur around the vertex V4 by the size of the cluster grown with the vertex V4 as the center is "p²".

The decoder 140 calculates an average value of the sizes of the clusters grown with the vertices V1 to V4 as respective centers. In the example of FIG. 32, the average value of the sizes is "(2 + 1 + 1 + 2)/4 = 3/2". The decoder 140 doubles the obtained average value "3/2" and obtains an average value "3" of a diameter of a circumscribed circle of the cluster. Using the obtained average value "3", the decoder 140 sets a probability that errors occur only with detection-event locations inside the cluster 62j to "p³". Accordingly, an existence probability of the decision boundary is expressed as "p³/(p³ + p⁴) ≈ 1 - p". That is, a logical inversion does not occur with a probability of "1 - p".

The decoder 140 may set a decision boundary that passes immediately above a reached detection-event location each time the cluster search range reaches a detection-event location by growth of the cluster search range. As a result, a larger number of decision boundaries are set. Further, the decoder 140 may calculate a probability of presence or absence of a logical inversion using weight values instead of existence probabilities of decision boundaries.

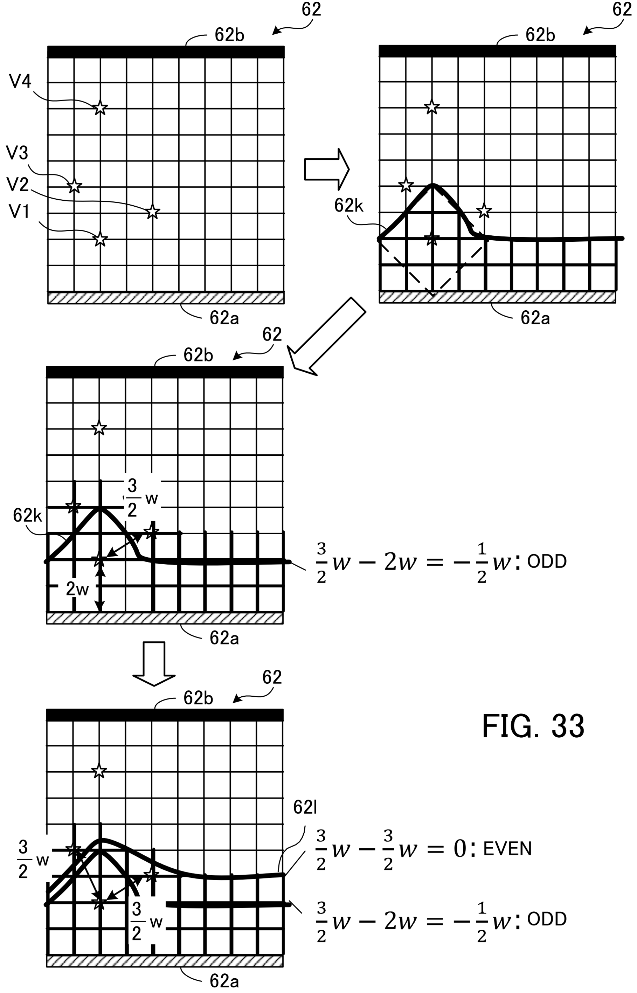

FIG. 33 is a first diagram illustrating an example of a method for calculating a probability of presence or absence of a logical inversion using weight values. In the decode graph 62, when the cluster search range grows from an initial state and reaches the vertex V1 that is a detection-event location, the decoder 140 grows a cluster with the vertex V1 as a center.

Thereafter, when the cluster search range further grows and reaches another vertex V2 that is a detection-event location, the decoder 140 grows a cluster with the vertex V2 as a center. When the clusters centered on the vertices V1 and V2 are combined, the decoder 140 sets a decision boundary 62k passing between the vertices V1 and V2, and calculates a weight value of the decision boundary 62k.

For example, a distance between a center vertex of the generated cluster and the logical boundary 62a is "2". Accordingly, the decoder 140 sets a weight value representing consecutive occurrence of errors from the center vertex of the generated cluster to the logical boundary 62a to "2w". Further, a distance between the center vertex V1 of the generated cluster and the newly reached vertex V2, which is a detection-event location, is "3". The decoder 140 sets a contribution for the distance "3" of the center vertex V1 of the generated cluster to one half of the distance, that is, "(3/2)w".

Then, based on weight values related to the vertex V1, the decoder 140 sets "(3/2)w - 2w = -(1/2)w" as a weight value of the decision boundary 62k. Since the number of detection-event locations below the decision boundary 62k is one (an odd number), the weight value of the decision boundary 62k contributes to a weight value representing logical inversion occurs.

When the cluster search range grows and reaches another vertex V3 that is a detection-event location, the decoder 140 grows a cluster with the vertex V3 as a center. When the cluster centered on the vertex V3 is combined with an existing cluster, the decoder 140 sets a decision boundary 62l passing between the vertices V1 and V3, and calculates a weight value of the decision boundary 62l. The weight value of the decision boundary 62l is "(3/2)w - (3/2)w = 0". Since the number of detection-event locations below the decision boundary 62l is two (an even number), the weight value of the decision boundary 62l contributes to a weight value representing logical inversion does not occur.

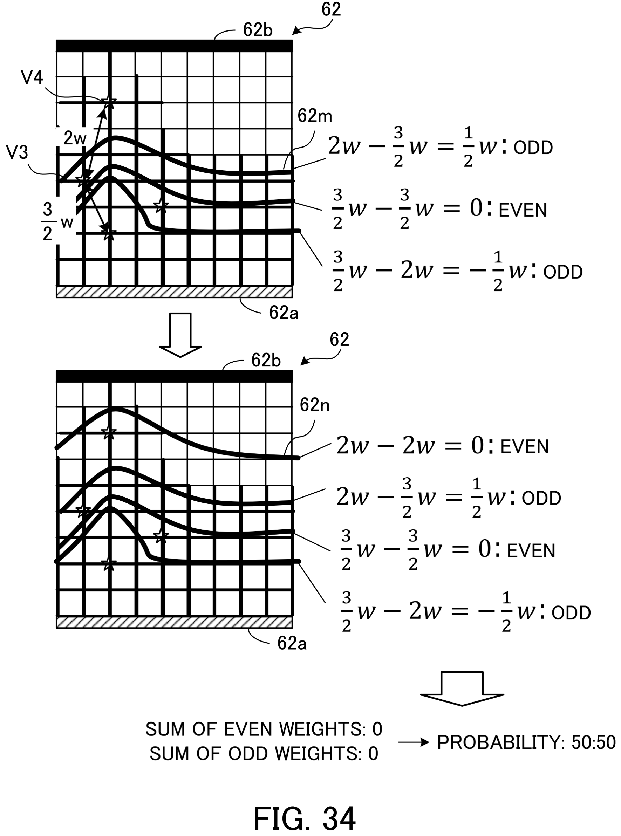

FIG. 34 is a second diagram illustrating an example of the method for calculating a probability of presence or absence of a logical inversion using weight values. When the cluster search range grows and reaches another vertex V4 that is a detection-event location, the decoder 140 grows a cluster with the vertex V4 as a center. When the cluster centered on the vertex V4 is combined with an existing cluster, the decoder 140 sets a decision boundary 62m passing between the vertices V3 and V4, and calculates a weight value of the decision boundary 62m. The weight value of the decision boundary 62m is "2w - (3/2)w = (1/2)w". Since the number of detection-event locations below the decision boundary 62m is three (an odd number), the weight value of the decision boundary 62m contributes to a weight value representing logical inversion occurs.

When the cluster search range grows and reaches the boundary 62b, the decoder 140 sets a decision boundary 62n passing between the vertex V4 and the boundary 62b, and calculates a weight value of the decision boundary 62n. The weight value of the decision boundary 62n is "2w - 2w = 0". Since the number of detection-event locations below the decision boundary 62n is four (an even number), the weight value of the decision boundary 62n contributes to a weight value representing logical inversion does not occur.

In the example of FIG. 34, a total of weight values representing logical inversion does not occur (even weights) is "0". A total of weight values representing logical inversion occurs (odd weights) is also "0". In this case, the probability that logical inversion occurs and the probability that logical inversion does not occur are equal (50:50).

In the second embodiment, a decision boundary that crosses from one end of the decode graph to the other end is set. However, the decoder 140 may set a decision boundary having one end reaching a logical boundary.

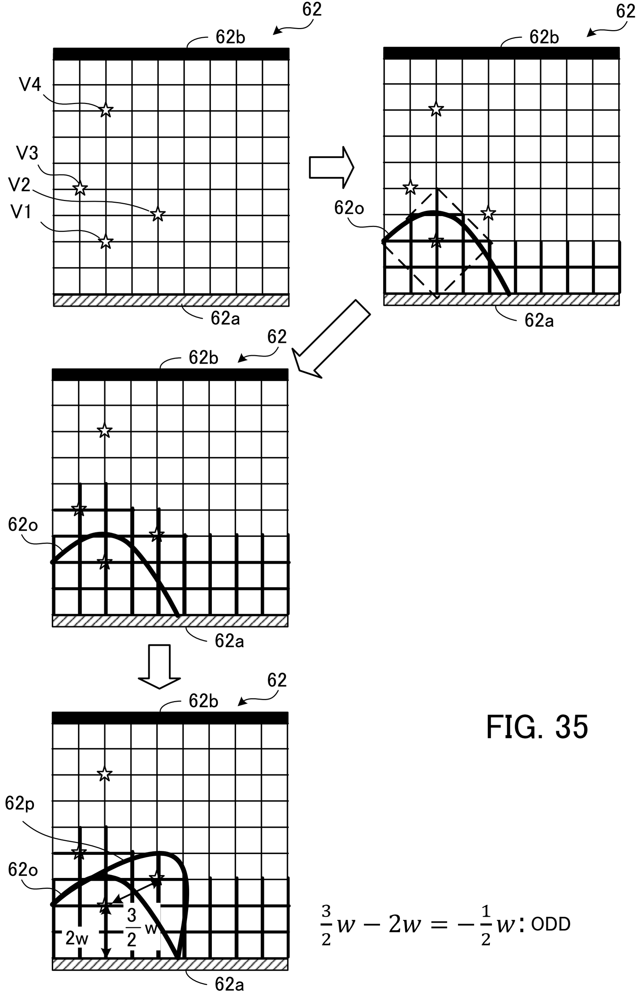

FIG. 35 is a first diagram illustrating an example of the method for calculating a probability of presence or absence of a logical inversion using a decision boundary connected to a logical boundary. In the decode graph 62, when the cluster search range grows from an initial state and reaches the vertex V1 that is a detection-event location, the decoder 140 grows a cluster with the vertex V1 as a center.

Thereafter, when the cluster search range further grows and reaches another vertex V2 that is a detection-event location, the decoder 140 grows a cluster with the vertex V2 as a center. When the clusters centered on the vertices V1 and V2 are combined, the decoder 140 sets a decision boundary 62o passing between the vertices V1 and V2 and connected to the logical boundary 62a.

When the cluster search range grows and reaches another vertex V3 that is a detection-event location, the decoder 140 grows a cluster with the vertex V3 as a center. When the cluster centered on the vertex V3 is combined with an existing cluster, the decoder 140 sets a decision boundary 62p passing between the vertices V1 and V3 and connected to the logical boundary 62a.

Thereafter, the decoder 140 calculates a weight value of the decision boundary 62o. The weight value of the decision boundary 62o is "(3/2)w - 2w = -(1/2)w". Since the number of detection-event locations below the decision boundary 62o is one (an odd number), the weight value of the decision boundary 62o contributes to a weight value representing logical inversion occurs.

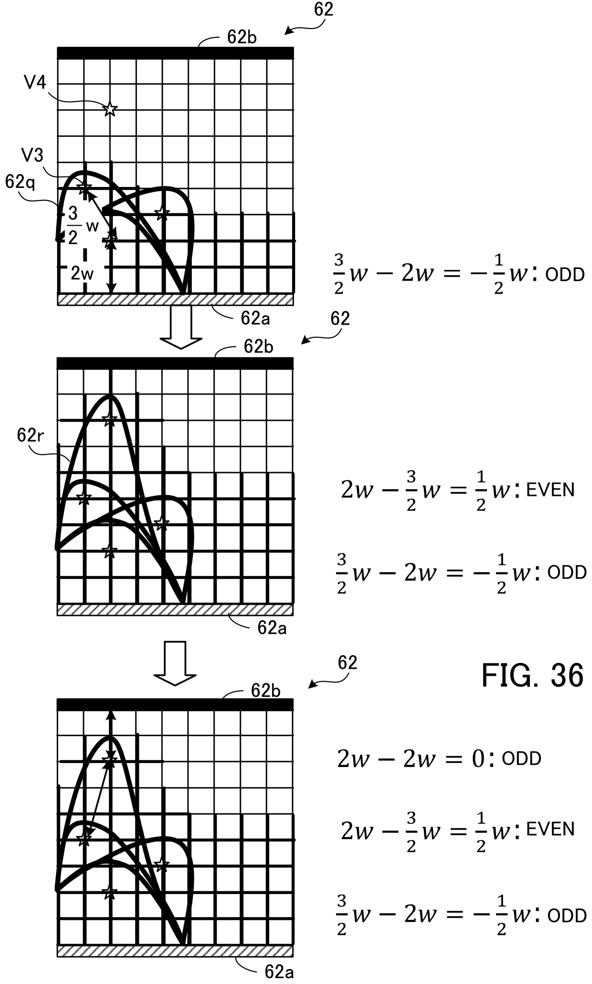

FIG. 36 is a second diagram illustrating an example of the method for calculating a probability of presence or absence of a logical inversion using a decision boundary connected to a logical boundary. When a cluster centered on the vertex V3 is combined with an existing cluster, the decoder 140 further sets a decision boundary 62q passing between the vertices V3 and V4 and connected to the logical boundary 62a.

When the cluster search range grows and reaches another vertex V4 that is a detection-event location, the decoder 140 grows a cluster with the vertex V4 as a center. When the cluster centered on the vertex V4 is combined with an existing cluster, the decoder 140 sets a decision boundary 62r passing between the vertex V4 and the boundary 62b and connected to the logical boundary 62a.

Thereafter, the decoder 140 calculates a weight value of the decision boundary 62q. The weight value of the decision boundary 62q is "2w - (3/2)w = (1/2)w". Since the number of detection-event locations below the decision boundary 62q is two (an even number), the weight value of the decision boundary 62q contributes to a weight value representing logical inversion does not occur.

Further, the decoder 140 calculates a weight value of the decision boundary 62r. The weight value of the decision boundary 62r is "2w - 2w = 0". Since the number of detection-event locations below the decision boundary 62r is three (an odd number), the weight value of the decision boundary 62r contributes to a weight value representing logical inversion occurs.

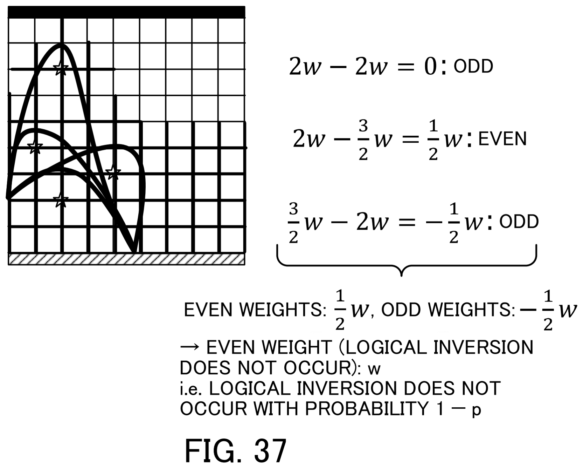

FIG. 37 is a third diagram illustrating an example of the method for calculating a probability of presence or absence of a logical inversion using a decision boundary connected to a logical boundary. The decoder 140 calculates a total of weight values for logical inversion does not occur and a total of weight values for logical inversion occurs. In the example of FIG. 37, a total of weight values representing logical inversion does not occur (even weights) is "1/2w". A total of weight values representing logical inversion occurs (odd weights) is "-1/2w".

Since a sign of the odd weight is negative, an absolute value "1/2" of the odd weight is added to the even weight, and a weight representing logical inversion does not occur becomes "w". The even weight value "w" corresponds to a probability that no error occurs in a physical qubit with an error probability "p". That is, a probability that a logical inversion does not occur is "1 - p".

In the second embodiment, the decode graph is a two-dimensional graph. However, the decode graph may be a three-dimensional graph. For example, when syndrome measurement of data qubits at a certain time is performed multiple times, states of ancilla qubits corresponding to the number of syndrome measurements are measured. In a three-dimensional decode graph, vertices corresponding to the number of syndrome measurements are provided for each ancilla qubit.

Although embodiments have been described above as examples, each configuration of each unit illustrated in the embodiments may be replaced with another configuration having a similar function. Further, any other component or process may be added. Furthermore, any two or more configurations (features) of the embodiments described above may be combined.

According to one aspect, a probability of presence or absence of a logical inversion is efficiently obtained.

## Claims

1. A computer program that causes a computer to execute a process comprising:
causing a quantum computer (1) to execute syndrome measurements of each of a plurality of ancilla qubits used for error detection of a plurality of data qubits representing a state of a logical qubit;
identifying, from a decode graph (2) in which a plurality of vertices corresponding to the plurality of ancilla qubits is connected by edges corresponding to the plurality of data qubits, based on results of the syndrome measurements by the quantum computer (1), one or more first vertices (3a to 3d) corresponding to one or more first ancilla qubits whose states have been inverted;
setting, in the decode graph (2), a boundary line (5a, 5b) that divides the decode graph into two regions; and
calculating, based on a number and an arrangement of the one or more first vertices (3a to 3d) located between the boundary line (5a, 5b) and a logical boundary (2a) including each second vertex corresponding to a second ancilla qubit used for determining presence or absence of inversion of a predetermined basis state of the logical qubit, probabilities that inversion of the state of the logical qubit has occurred and that inversion of the state of the logical qubit has not occurred.

2. The computer program according to claim 1, wherein
the calculating of the probabilities that inversion of the state of the logical qubit has occurred and that inversion of the state of the logical qubit has not occurred includes calculating, based on the number and the arrangement of the one or more first vertices (3a to 3d) located between the boundary line (5a, 5b) and the logical boundary (2a), a first probability that no error has occurred on edges of the decode graph (2) crossing the boundary line, and calculating, based on the first probability, the probabilities that inversion of the state of the logical qubit has occurred and that inversion of the state of the logical qubit has not occurred.

3. The computer program according to claim 2, wherein
the calculating of the probabilities that inversion of the state of the logical qubit has occurred and that inversion of the state of the logical qubit has not occurred includes determining whether the number of the one or more first vertices (3a to 3d) located between the boundary line (5a, 5b) and the logical boundary (2a) is even or odd, calculating, when the number is even, based on the first probability, a second probability that inversion of the state of the logical qubit has not occurred, and calculating, when the number is odd, based on the first probability, a third probability that inversion of the state of the logical qubit has occurred.

4. The computer program according to claim 3, wherein
the setting of the boundary line (5a, 5b) includes setting the boundary line (5a, 5b) in plurality, and
the calculating of the probabilities that inversion of the state of the logical qubit has occurred and that inversion of the state of the logical qubit has not occurred includes setting, as the second probability that inversion of the state of the logical qubit has not occurred, a sum of the respective first probabilities corresponding to the plurality of boundary lines (5a) for which the number is even, and setting, as the third probability that inversion of the state of the logical qubit has occurred, a sum of the respective first probabilities corresponding to the plurality of boundary lines (5b) for which the number is odd.

5. The computer program according to claim 3, wherein
the calculating of the probabilities that inversion of the state of the logical qubit has occurred and that inversion of the state of the logical qubit has not occurred includes calculating, upon determining that the number is even, as the second probability, a probability that states of the one or more first vertices (3a to 3d) are inverted due to errors occurring in data qubits corresponding to edges connecting one or more pairs of the one or more first vertices (3a to 3d) located between the boundary line (5a, 5b) and the logical boundary (2a), and calculating, upon determining that the number is odd, as the third probability, a probability that a state is inverted due to an error occurring in a data qubit corresponding to an edge connecting one of the one or more first vertices (3a to 3d) located between the boundary line (5a, 5b) and the logical boundary (2a) to the logical boundary (2a).

6. The computer program according to any preceding claim, wherein
the setting of the boundary line (5a, 5b) includes generating, based on positions of each of the one or more first vertices (3a to 3d), a cluster (4a, 4b) including at least some of the one or more first vertices (3a to 3d), and setting the boundary line (5a, 5b) at a position avoiding paths on the decode graph (2) connecting the one or more first vertices belonging to the same cluster.

7. The computer program according to claim 6, wherein
the setting of the boundary line (5a, 5b) includes expanding regions respectively centered on the one or more first vertices, combining, upon coming into contact with each other, the regions into a single combined region, and defining, as the cluster (4a, 4b), the single combined region obtained upon satisfaction of an expansion stop condition of the regions.

8. The computer program according to claim 7, wherein
the setting of the boundary line (5a, 5b) includes growing search ranges in parallel from each second vertex belonging to the logical boundary along edges of the decode graph (2), and expanding, upon the search ranges reaching one of the one or more first vertices, the regions respectively centered on the reached first vertices.

9. A quantum computation support method executed by a computer, the quantum computation support method comprising:
causing a quantum computer (1) to execute syndrome measurements of each of a plurality of ancilla qubits used for error detection of a plurality of data qubits representing a state of a logical qubit;
identifying, from a decode graph (2) in which a plurality of vertices corresponding to the plurality of ancilla qubits is connected by edges corresponding to the plurality of data qubits, based on results of the syndrome measurements by the quantum computer (1), one or more first vertices (3a to 3d) corresponding to one or more first ancilla qubits whose states have been inverted;
setting, in the decode graph (2), a boundary line (5a, 5b) that divides the decode graph (2) into two regions; and
calculating, based on a number and an arrangement of the one or more first vertices (3a to 3d) located between the boundary line (5a, 5b) and a logical boundary (2a) including each second vertex corresponding to a second ancilla qubit used for determining presence or absence of inversion of a predetermined basis state of the logical qubit, probabilities that inversion of the state of the logical qubit has occurred and that inversion of the state of the logical qubit has not occurred.

10. An information processing apparatus (10) comprising:
processing means (12) for:
causing a quantum computer (1) to execute syndrome measurements of each of a plurality of ancilla qubits used for error detection of a plurality of data qubits representing a state of a logical qubit;
identifying, from a decode graph (2) in which a plurality of vertices corresponding to the plurality of ancilla qubits is connected by edges corresponding to the plurality of data qubits, based on results of the syndrome measurements by the quantum computer (1), one or more first vertices (3a to 3d) corresponding to one or more first ancilla qubits whose states have been inverted;
setting, in the decode graph (2), a boundary line (5a, 5b) that divides the decode graph (2) into two regions; and
calculating, based on a number and an arrangement of the one or more first vertices (3a to 3d) located between the boundary line (5a, 5b) and a logical boundary (2a) including each second vertex corresponding to a second ancilla qubit used for determining presence or absence of inversion of a predetermined basis state of the logical qubit, probabilities that inversion of the state of the logical qubit has occurred and that inversion of the state of the logical qubit has not occurred.
